# EUROPEAN PATENT APPLICATION

(11) **EP 1 845 429 A2**
(43) Date of publication of application: **17.10.2007**
(21) Application number: 07007434.9
(22) Date of filing: 11.04.2007
(51) Int. Cl.: G05B 19/418, G05B 23/02

(54) **Fault management apparatus**

(30) Priority: 11.04.2006 JP 2006109123
(71) Applicant: OMRON CORPORATION, Kyoto-shi, Kyoto 600-8530 (JP)
(72) Inventor: Moriya, Toshihi, c/o Omron Corporation, Shimogyo-ku Kyoto-shi Kyoto 600-8530 (JP); Nakajima, Akira, c/o Omron Corporation, Shimogyo-ku Kyoto-shi Kyoto 600-8530 (JP)
(74) Representative: Kilian, Helmut

(57) **Abstract**

A fault management apparatus that enables calculation of evaluation values relating to a fault occurring to a management target as objective values without involvement of human judgment is provided. Fault information containing fault content information showing content of a fault occurring to a process in a production line, and detection status information and action content information associated with the fault is stored in a fault occurrence history storage part as a fault occurrence history. A fault extraction part reads the fault occurrence history from the fault occurrence history storage part to extract fault information containing specific fault content information. An influence degree calculation part calculates a degree of influence showing the degree of influence caused by a specific fault by performing statistical processing based on detection status information and action content information contained in the fault information extracted by the fault extraction part.

## Description

### BACKGROUND OF THE INVENTION

### 1. Field of the Invention

The present invention relates to a fault management apparatus, fault management method, and fault management program that perform management relating to reliability analysis and fault factor analysis of management targets by a technique of, for example, FMEA, and a recording medium recording the same.

### 2. Description of the related art

FMEA (Failure Mode and Effects Analysis) has been used as a management method of a production line manufacturing a specific product. Process FMEA is a process control method that examines a countermeasure to be taken when a failure occurs based on a process FMEA table as a listing in which information such as processes, functions, phenomena, influences, and countermeasures for each failure mode anticipated in a specific production line are described.

Information on a degree of influence, occurrence frequency and degree of detection is set in the process FMEA as values for examining necessity of countermeasure in each failure mode. The occurrence frequency is an item showing an occurrence frequency of a failure shown in a phenomenon item as a numerical value. The degree of influence is an item showing an influence of a failure shown in the phenomenon item on a product as a numerical value. The degree of detection is an item showing a degree of difficulty of detecting a failure shown in the phenomenon item. Also, a risk priority number showing a level of necessity of countermeasure is calculated for each failure mode based on the degree of influence, occurrence frequency and degree of detection.

According to the process FMEA, as described above, evaluation values from three points (degree of influence, occurrence frequency, and degree of detection) relating to quality of a product for each type of failure are shown and a final index, the risk priority number, will be calculated based on these evaluation values. Thus, by checking the value of risk priority number, failures with high improvement effects can be found. That is, according to the process FMEA, a quantitative evaluation of process improvement can be performed for each failure that could occur in each process of the production line (refer to, for example, Japanese Patent No. 3693177 issued on Sept. 7, 2005).

However, evaluations of the degree of influence, occurrence frequency, and degree of detection in the conventional process FMEA are set in accordance with judgment based on human subjective points of view. More specifically, criteria for evaluations of the degree of influence, occurrence frequency, and degree of detection include examples shown below.

If the evaluation value of the degree of influence should be in five grades, the criteria of evaluation of each grade may look as shown below:
5: Functions and performance of a product are enormously influenced.
4: Though functions and performance of a product are not enormously influenced, factory productivity and first run rate are greatly influenced.
3: Factory productivity and first run rate are moderately influenced.
2: Factory productivity and first run rate are influenced to some extent.
1: Almost no influence even if a failure occurs

If the evaluation value of the occurrence frequency should be in five grades, the criteria of evaluation of each grade may look as shown below:
5: A failure occurs almost certainly or frequently in a downstream process.
4: A failure occurs frequently in similar products.
3: A failure can occur.
2: A failure occurs in similar products with a low rate of occurrence.
1: A failure occurs very rarely or only in self-process.

If the evaluation value of the degree of detection should be in five grades, the criteria of evaluation of each grade may look as shown below:
5: Delivered to users, leading to complaints from the market
4: Detected before shipment
3: Detected in an assembly line
2: Detected in the line
1: Detected in the process

Each of the criteria for evaluation is qualitative, as described above, and therefore subjective points of view of a person who performs evaluations easily slips into evaluation.

A technique can be considered, for example, in which each evaluation value is changed to a more appropriate one by a review done by a different person from a person who performed the evaluation. Unfortunately, numbers of processes and failures managed by the process FMEA are generally enormous and a great deal of time would be required for such reviews.

The present invention has been made in view of the above problem and an object thereof is to provide a fault management apparatus, fault management method, and fault management program that enable calculation of evaluation values relating to a fault occurring to a management target as objective values without involvement of human judgment, and a recording medium recording the same.

### SUMMARY OF THE INVENTION

To solve the above problem, a fault management apparatus according to the present invention includes: a fault extractor for extracting fault information containing specific fault content information from a fault occurrence history by reading the fault occurrence history from a fault occurrence history storage device storing, as the fault occurrence history, fault information containing fault content information showing content of a fault occurring to a management target; at least one of an influence degree calculator for calculating a degree of influence showing a degree of influence of a specific fault on the management target, an occurrence frequency calculator for calculating an occurrence frequency showing an occurrence frequency of the specific fault, and a detection degree calculator for calculating a degree of detection showing difficulty of detecting the specific fault; a risk priority number calculator for calculating a risk priority number showing a level of necessity of countermeasure based on at least one of the degree of influence, occurrence frequency, and degree of detection; and an output controller for outputting the risk priority number calculated by the risk priority number calculator, wherein the influence degree calculator calculates the degree of influence by performing statistical processing based on at least one of detection status information showing detection status of an occurrence of the fault and action content information showing content of action taken to improve the fault contained in the fault information extracted by the fault extractor, the occurrence frequency calculator calculates the occurrence frequency by reading processing history information from a processing history storage device storing the processing history information showing a history of processing performed to the management target and performing statistical processing based on the fault information extracted by the fault extractor and the processing history information, and the detection degree calculator calculates the degree of detection showing difficulty of detecting the specific fault by performing statistical processing based on at least one of the detection status information showing the detection status of the occurrence of the fault and detection method information showing a method of detecting the occurrence of the fault contained in the fault information extracted by the fault extractor.

According to the above configuration, the risk priority number is calculated based on at least one of the degree of influence, occurrence frequency, and degree of detection calculated by performing statistical processing from fault history information or the like. Here, the degree of influence is information showing the degree of influence of a specific fault on a management target and therefore, information to be an indicator of a level of necessity of countermeasure. The occurrence frequency is information showing the occurrence frequency of a specific fault and therefore, also information to be an indicator of a level of necessity of countermeasure. The degree of detection is information showing difficulty of detecting a specific fault and therefore, also information to be an indicator of a level of necessity of countermeasure. That is, the risk priority number showing the level of necessity of countermeasure can be calculated by using at least one of the degree of influence, occurrence frequency, and degree of detection. The risk priority number does not require involvement of human judgment for calculation and thus can be calculated as an objective value.

### BRIEF DESCRIPTION OF THE DRAWINGS

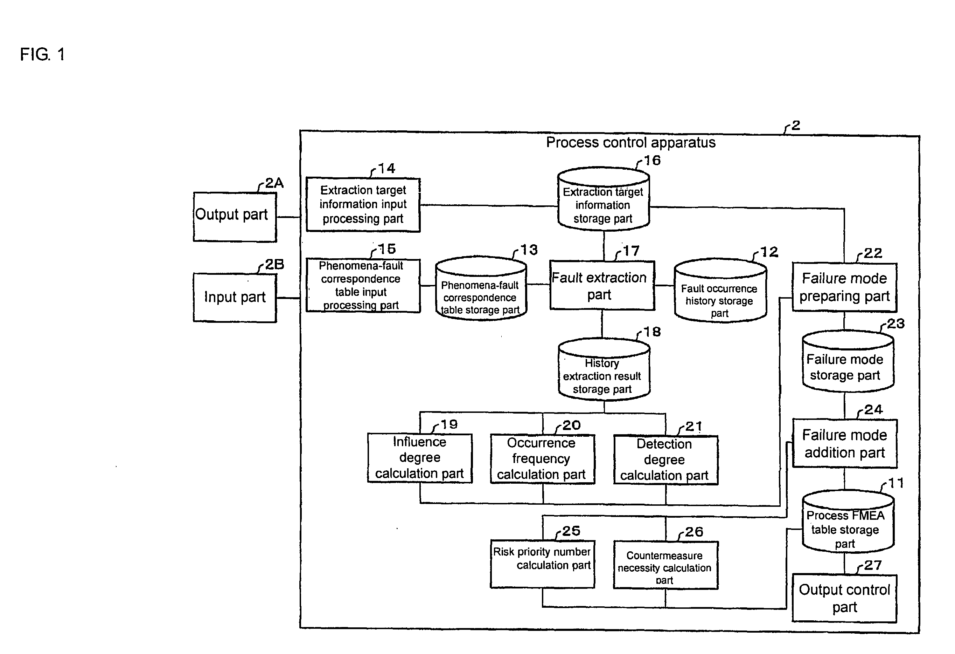

[0045] FIG. 1 shows a block diagram showing an outline function configuration of a process control apparatus according to an embodiment of the present invention;
FIG. 2 shows a block diagram showing an outline configuration of a process control system according to the embodiment of the present invention;
FIG. 3 shows a diagram showing an example of a process FMEA table;
FIG. 4A shows an example of failures that could occur in each process of a production line among items of the process FMEA table by extracting the items of the occurrence frequency, degree of influence, degree of detection, risk priority number, and necessity of countermeasure corresponding to each failure, and FIG. 4B shows a state of reevaluation of a post-countermeasure occurrence frequency, post-countermeasure degree of detection, and post-countermeasure risk priority number after taking countermeasure;
FIG. 5 shows a flow chart showing an overall flow of process control processing;
FIG. 6 shows a block diagram showing the outline function configuration of an influence degree calculation part;
FIG. 7 shows a flow chart showing the flow of influence degree calculation processing;
FIG. 8 is a diagram showing an example of a phenomena-fault correspondence table;
FIG. 9 shows a diagram showing an example of a fault occurrence history;
FIG. 10 shows a diagram showing a result of extracting fault information whose process name is "Element soldering," whose phenomenon is "Missing soldering," and whose period is "8/1/2003 to 8/1/2004" from the fault occurrence history shown in FIG. 9;
FIG. 11 shows a diagram showing an example of an action classification table;
FIG. 12 shows a diagram showing an example of an action cost table;
FIG. 13 shows a diagram showing a result after adding information on action classification and action cost to an extraction result of fault information shown in FIG. 10;
FIG. 14 shows a diagram showing an example of an influence degree calculation table;
FIG. 15A shows a diagram showing an example of the process FMEA table before failure mode addition processing, FIG. 15B shows an example of a failure mode to be added, and FIG. 15C shows a diagram showing an example of the process FMEA table after failure mode addition processing;
FIG. 16A shows a diagram showing an example of the process FMEA table before failure mode addition processing, FIG. 16B shows a diagram showing an example of the failure mode to be added, and FIG. 16C shows a diagram showing a state in which a value is added to the degree of influence item of the failure mode corresponding to the phenomenon "Missing soldering";
FIG. 17 shows a block diagram showing the outline function configuration of an occurrence frequency calculation part;
FIG. 18 shows a flow chart showing the flow of occurrence frequency calculation processing;
FIG. 19 shows a diagram showing an example of a production history;
FIG. 20 shows a diagram showing an example of an occurrence frequency calculation table;
FIG. 21 shows a block diagram showing the outline function configuration of a detection degree calculation part;
FIG. 22 shows a flow chart showing the flow of detection degree calculation processing;
FIG. 23 shows a diagram showing an example of a detection risk table;
FIG. 24 shows a diagram showing an example of a result of adding detection risk information to an extraction result of fault information;
FIG. 25 shows a diagram showing an example of a detection degree calculation table;
FIG. 26 shows a block diagram showing the outline function configuration of a risk priority number calculation part;
FIG. 27 shows a flow chart showing the flow of risk priority number calculation processing;
FIG. 28 shows a diagram showing a state in which the risk priority number has been input for each failure mode in the process FMEA table;
FIG. 29 shows a block diagram showing the outline function configuration of a countermeasure necessity calculation part;
FIG. 30 shows a flow chart showing the flow of countermeasure necessity calculation processing;
FIG. 31 shows a diagram showing a state in which the necessity of countermeasure has been input for each failure mode in the process FMEA table; and
FIG. 32 shows a diagram showing an example of the process FMEA table.

### DETAILED DESCRIPTION OF THE PREFERRED EMBODIMENTS

An embodiment of the present invention will be described below with reference to drawings. For the present embodiment, a process control system applied to a production system having a production line for producing precision components such as sensor units, but the present invention is not limited to such a system and can generally be applied to control of a treatment process of targets. The treatment process of targets means, for example, a production process of industrial goods, an inspection process of industrial products, agricultural products, and raw material, a treatment process of waste (for example, industrial waste, industrial effluent, and garbage), an inspection process of waste, an inspection process of facilities, and a recycle process.

### (Configuration of the process control system)

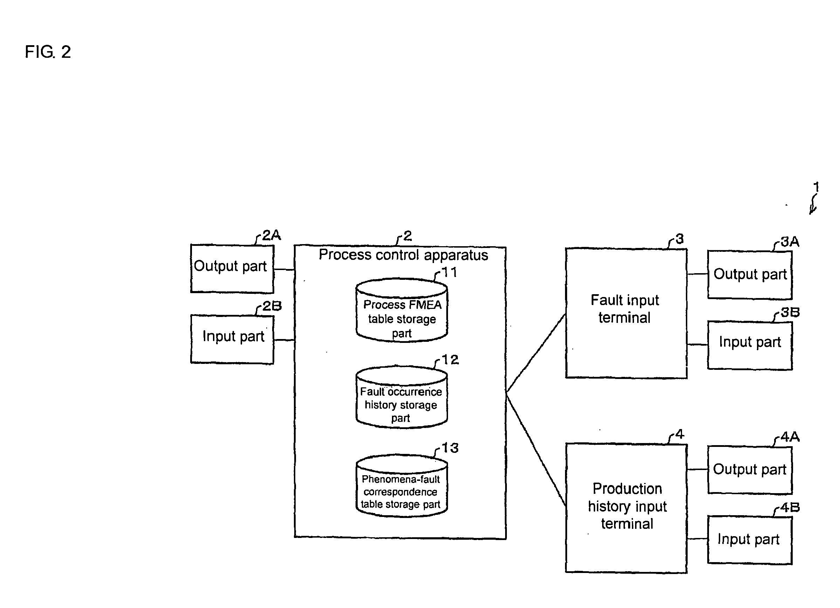

FIG. 2 shows a block diagram of an outline configuration of a process control system 1 according to the present invention. As shown in FIG. 1, the process control system 1 includes a process control apparatus 2, a fault input terminal 3, and a production history input terminal 4.

The process control apparatus 2 is an apparatus for supervising work status in each process (control target) in a production line. The process control apparatus 2 is connected to an output part 2A and an input part 2B. The input part 2B receives input of various kinds of information and instruction input from a user as a production controller. The output part 2A presents results of data processing performed by the process control apparatus 2 to the user.

The process control apparatus 2 also includes a process FMEA table storage part 11, a fault occurrence history storage part 12, and a phenomena-fault correspondence table storage part 13. The process FMEA table storage part 11, whose details will be described later, is a database storing table data of process FMEA (Failure Mode and Effects Analysis). The fault occurrence history storage part 12 is a database storing fault information occurring in each process of the production line. The phenomena-fault correspondence table storage part 13, whose details will be described later, is a database storing a phenomena-fault correspondence table that is a table for associating types of fault information stored in the fault occurrence history storage part 12 with phenomena of higher-level concept.

The fault input terminal 3 receives input of fault information occurring in each process of the production line and performs processing of storing the fault information in the fault occurrence history storage part 12. The fault input terminal 3 is connected to an output part 3A and an input part 3B. The input part 3B receives input of fault information from a user as a person in charge of fault information input. The output part 3A presents processing content performed by the fault input terminal 3 to the user.

Instead of fault information being input from the fault input terminal 3, detection result information output from a fault detection sensor provided in each process may be stored in the fault occurrence history storage part 12 as fault information. Also, fault information may be stored in the fault occurrence history storage part 12 from both the fault input terminal 3 and fault detection sensor. Also, detection result information output from the fault detection sensor, after being transmitted to the fault input terminal 3, may be stored together with fault information input by the user in the fault occurrence history storage part 12 by the fault input terminal 3.

The production history input terminal 4 receives input of production history information in each process of the production line and performs processing of transmitting the production history information to the process control apparatus 2. The production history input terminal 4 is connected to an output part 4A and an input part 4B. The input part 4B receives input of production history information from a user as a person in charge of production history information input. The output part 4A presents processing content performed by the production history input terminal 3 to the user.

Instead of production history information being input from the production history input terminal 4, detection result information output from a production status detection sensor provided in each process may be transmitted to the process control apparatus 2 as production history information. Also, production history information may be transmitted to the process control apparatus 2 from both the production history input terminal 4 and production status detection sensor. Also, detection result information output from the production status detection sensor, after being transmitted to the production history input terminal 4, may be transmitted together with production history information input by the user to the process control apparatus 2 by the production history input terminal 4.

The output parts 2A, 3A, and 4A connected to the process control apparatus 2, fault input terminal 3, and production history input terminal 4 respectively are configured, for example, by a display device for displaying information, but may also by configured by a printing apparatus for printing information on print media or an information transmitting apparatus for transmitting information to an external terminal unit. The input parts 2B, 3B, and 4B connected to the process control apparatus 2, fault input terminal 3, and production history input terminal 4 respectively are configured, for example, by a pointing device such as a mouse or an instruction input device such as a keyboard.

The process control apparatus 2 and the fault input terminal 3 and production history input terminal 4 are connected for communication by a communication medium. The communication medium may be a cable or wireless. LAN (Local Area Network) connection can be cited as a form of communication connection.

Incidentally, in the configuration shown in FIG. 2, one unit of each of the fault input terminal 3 and production history input terminal 4 is connected to the process control apparatus 2, but a plurality of units of each may be connected. Also, the fault input terminal 3 and/or production history input terminal 4 may not be provided so that fault information and/or production history information is directly input into the process control apparatus 2. If no production history information is needed, a configuration may be adopted in which the production history input terminal 4 is not provided or production history information is not input into the process control apparatus 2.

Also, in the configuration shown in FIG. 2, the process FMEA table storage part 11, fault occurrence history storage part 12, and phenomena-fault correspondence table storage part 13 are included in the process control apparatus 2, but may be provided in a terminal unit as a database server connected to the process control apparatus 2 for communication.

### (Configuration of the process control apparatus)

FIG. 1 shows a block diagram of an outline function configuration of the process control apparatus 2. As shown in FIG. 1, the process control apparatus 2 includes, in addition to the process FMEA table storage part 11, fault occurrence history storage part 12, and phenomena-fault correspondence table storage part 13 described above, an extraction target information input processing part 14, a phenomena-fault correspondence table input processing part 15, an extraction target information storage part 16, a fault extraction part 17, a history extraction result storage part 18, an influence degree calculation part 19, an occurrence frequency calculation part 20, a detection degree calculation part 21, a failure mode preparing part 22, a failure mode storage part 23, a failure mode addition part 24, a risk priority number calculation part 25, a countermeasure necessity calculation part 26, and an output control part 27.

The extraction target information input processing part 14 performs processing of receiving information on a process name, phenomenon, and period as extraction target information input by a user. The extraction target information storage part 16 stores the extraction target information received by the extraction target information input processing part 14.

The phenomena-fault correspondence table input processing part 15 performs processing of receiving information on a phenomena-fault correspondence table input by a user and storing the information in the phenomena-fault correspondence table storage part 13.

The fault extraction part 17 reads information on a phenomenon specified by the user and extracts fault content information corresponding to the read phenomenon from the phenomena-fault correspondence table stored in the phenomena-fault correspondence table storage part 13. Then, the fault extraction part 17 extracts fault information corresponding to the process, phenomenon, and period specified by the user from a fault occurrence history stored in the fault occurrence history storage part 12. The history extraction result storage part 18 stores the fault information extracted by the fault extraction part 17.

The influence degree calculation part 19, which will be described in detail later, performs processing of calculating a degree of influence of the failure mode by statistical processing based on the fault information extracted by the fault extraction part 17. The occurrence frequency calculation part 20, which will be described in detail later, performs processing of calculating an occurrence frequency of the failure mode by statistical processing based on the fault information extracted by the fault extraction part 17. The detection degree calculation part 21, which will be described in detail later, performs processing of calculating a degree of detection of the failure mode by statistical processing based on the fault information extracted by the fault extraction part 17.

The failure mode preparing part 22 performs processing of preparing a failure mode based on the degree of influence, occurrence frequency, and/or degree of detection calculated by the influence degree calculation part 19, occurrence frequency calculation part 20, and/or detection degree calculation part 21. The failure mode storage part 23 stores the failure mode prepared by the failure mode preparing part 22. The failure mode addition part 24 performs processing of adding the failure mode to the process FMEA table stored in the process FMEA table storage part 11.

The risk priority number calculation part 25, which will be described in detail later, performs processing of calculating a risk priority number for each failure mode of the process FMEA table. The countermeasure necessity calculation part 26, which will be described in detail later, performs processing of determining necessity of countermeasure for each failure mode of the process FMEA table.

The output control part 27 performs processing of outputting content of the process FMEA table in response to a request from the user. The request from the user is received via the input part 2B and content of the process FMEA table is output from the output part 2A.

### (Process FMEA)

Here, the process FMEA table will be described. As described above, the process FMEA table is a process control method in which countermeasure to be taken when a failure occurs is examined based on the process FMEA table listing information such as the process, function, phenomena, influence, and countermeasure for each failure mode anticipated for a specific production line.

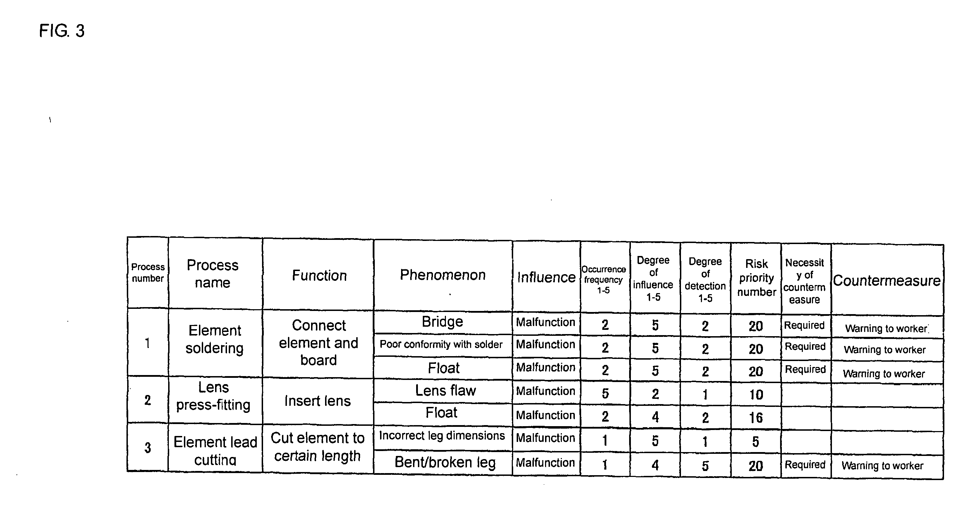

FIG. 3 shows an example of the process FMEA table. As shown in FIG. 3, the process FMEA table has items of a process number, process name, function, phenomenon, influence, occurrence frequency, degree of detection, risk priority number, necessity of countermeasure, and countermeasure in which information showing failure content is recorded for each type of phenomena. A group of information (information in one horizontal row in the table of FIG. 3) of each item for each type of phenomena is called a failure mode (fault mode).

Among the above items, the process number is an item showing the number to identify the process. The process name is an item showing the name of a process. The function is an item showing information such as work content and role of a process. The phenomenon is an item showing content of an anticipated failure (risk, or defect). The influence is an item showing an influence of a failure shown in the phenomenon item on a product.

The occurrence frequency is an item showing the occurrence frequency of a failure shown in the phenomenon item as a numeric value. In the present embodiment, the greater the value of occurrence frequency, the higher the frequency. The degree of influence (importance) is an item showing an influence of a failure shown in the phenomenon item on a product as a numeric value. In the present embodiment, the greater the value of degree of influence, the more serious the influence. The degree of detection is an item showing difficulty of detecting a failure shown in the phenomenon item. In the present embodiment, the greater the value of degree of detection, the more difficult the detection (the easier the outflow to the market). The risk priority number (RPN) is an item showing necessity of countermeasure for a failure shown in the phenomenon item as a numeric value. In the present embodiment, a multiplication result of the occurrence frequency, degree of influence, and degree of detection is set as the risk priority number. The necessity of countermeasure is an item showing whether countermeasure needs to be taken for a corresponding process. The countermeasure is an item showing content of countermeasure.

In the process FMEA table, as described above, evaluation values from three points (degree of influence, occurrence frequency, and degree of detection) relating to quality of a product for each type of failure are shown and a final index, the risk priority number, will be calculated based on these evaluation values. Then, by sorting phenomena in descending order of risk priority number, failures of high improvement effects can be found. Also, by extracting phenomena whose risk priority number is equal to or higher than a predetermined threshold value, only failures to be improved can be selected. That is, according to the process FMEA table, qualitative evaluations relating to process improvement can be performed for each failure that could occur in each process of the production line.

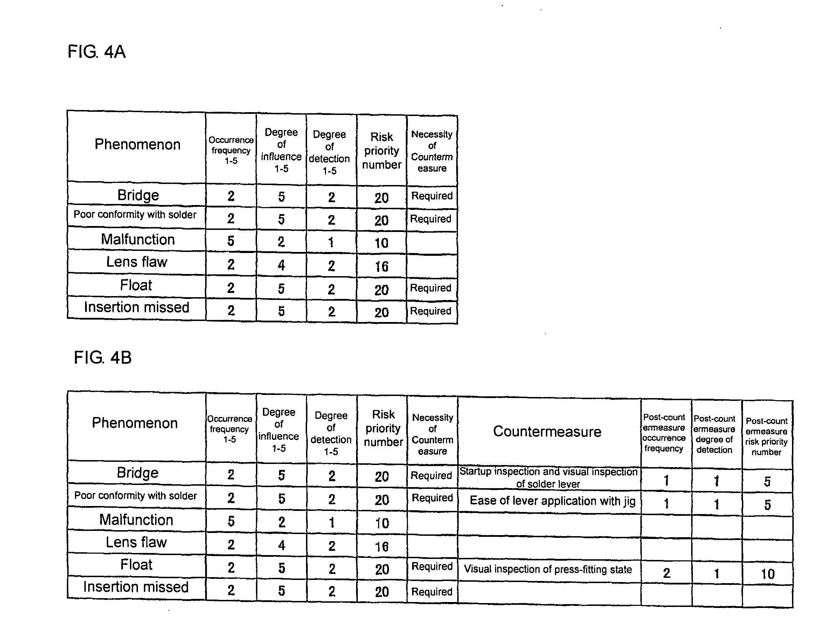

After taking process improvement countermeasure, the process FMEA table can also provide a qualitative evaluation of effects by the process improvement countermeasure. FIG. 4A shows an example of failures that could occur in each process of the production line among items of the process FMEA table by extracting the items of the occurrence frequency, degree of influence, degree of detection, risk priority number, and necessity of countermeasure corresponding to each failure. In this example, a countermeasure requirement flag is attached to failures of "Bridge," "Poor conformity with solder," "Float," and "Insertion missed" in the phenomenon item.

In contrast, FIG. 4B shows a state of reevaluation of the post-countermeasure occurrence frequency, post-countermeasure degree of detection, and post-countermeasure risk priority number after taking countermeasure by taking improvement countermeasure against failures of "Bridge," "Poor conformity with solder," and "Float." As is evident from FIG. 4B, the danger priorities of these failures have dropped.

According to the process FMEA table, as described above, effects of improvement countermeasure can be evaluated by comparing danger priorities before and after taking improvement countermeasure. Also, improvement countermeasure status in a production line and effects thereof can be shown quantitatively by using such a process FMEA table, and therefore the process FMEA table can be used as material to make an appeal of safety in a production system, for example, to customers of the product.

### (Overall flow of process control processing)

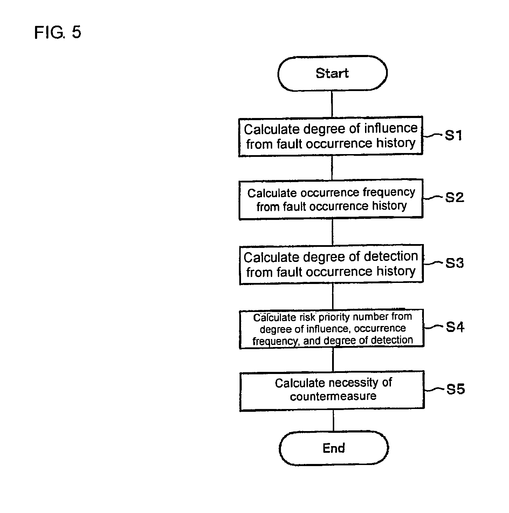

Next, in step 1 (hereinafter referred to as S1), an overall flow of process control processing performed in the process control apparatus 2 will be described with reference to a flow chart shown in FIG. 5. First, a degree of influence is calculated based on a fault occurrence history stored in the fault occurrence history storage part 12. Calculation processing of the degree of influence is performed by the influence degree calculation part 19, whose details thereof will be described later.

Next, in S2, an occurrence frequency is calculated based on the fault occurrence history stored in the fault occurrence history storage part 12. Calculation processing of the occurrence frequency is performed by the occurrence frequency calculation part 20, whose details thereof will be described later.

Next, in S3, a degree of detection is calculated based on the fault occurrence history stored in the fault occurrence history storage part 12. Calculation processing of the degree of detection is performed by the detection degree calculation part 21, whose details thereof will be described later.

While calculations of the degree of influence, occurrence frequency, and degree of detection are performed in this order in an example shown in FIG. 5, each of the calculation processing is independent from one another, and thus may be performed in any order or in parallel.

After the degree of influence, occurrence frequency, and degree of detection are calculated as described above, a risk priority number is calculated based thereon in S4. Calculation processing of the risk priority number is performed by the risk priority number calculation part 25, whose details thereof will be described later.

After the risk priority number is calculated, necessity of countermeasure is calculated based thereon in S5. Calculation processing of the necessity of countermeasure is performed by the countermeasure necessity calculation part 26, whose details thereof will be described later.

The present embodiment is configured to calculate the degree of influence, occurrence frequency, and degree of detection, but may be configured to calculate at least one of the degree of influence, occurrence frequency, and degree of detection. Also, neither risk priority number nor necessity of countermeasure may be calculated, or one of the risk priority number and necessity of countermeasure may be calculated.

### (Configuration of the influence degree calculation part)

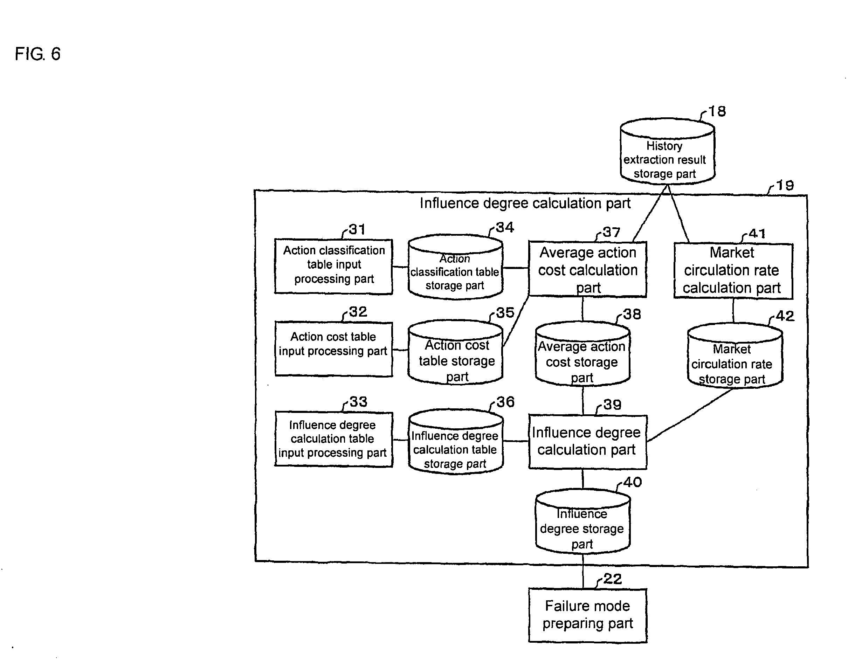

Next, the influence degree calculation part 19 will be described. FIG. 6 shows an outline function configuration of the influence degree calculation part 19. As shown in FIG. 6, the influence degree calculation part 19 includes an action classification table input processing part 31, an action cost table input processing part 32, an influence degree calculation table input processing part 33, an action classification table storage part 34, an action cost table storage part 35, an influence degree calculation table storage part 36, an average action cost calculation part 37, an average action cost storage part 38, an influence degree calculation part 39, an influence degree storage part 40, a market outflow rate calculation part 41, and a market outflow rate storage part 42.

The action classification table input processing part 31 performs of receiving information on an action classification table input by a user to store in the action classification table storage part 34. The action cost table input processing part 32 performs processing of receiving information on an action cost table input by the user to store in the action cost table storage part 35. The influence degree calculation table input processing part 33 performs processing of receiving information on an influence degree calculation table input by the user to store in the influence degree calculation table storage part 36.

The average action cost calculation part 37 reads action item information for a fault from fault information extracted by the fault extraction part 17 and determines action classification to be a higher-level concept than each action content contained in the read action items. Then, the average action cost calculation part 37 calculates an action cost based on the action classification corresponding to the action content for each piece of fault information extracted by the fault extraction part 17 to calculates an average action cost. The average action cost storage part 38 stores the average action cost calculated by the average action cost calculation part 37.

The market outflow rate calculation part 41 performs processing of reading fault information extracted by the fault extraction part 17 and calculating a market outflow rate. The market outflow rate storage part 42 stores the market outflow rate calculated by the market outflow rate calculation part 41.

The influence degree calculation part 39 performs processing of calculating a degree of influence based on the market outflow rate calculated by the market outflow rate calculation part and the average action cost calculated by the average action cost calculation part 37. The influence degree storage part 40 stores the degree of influence calculated by the influence degree calculation part 39.

### (Flow of influence degree calculation processing)

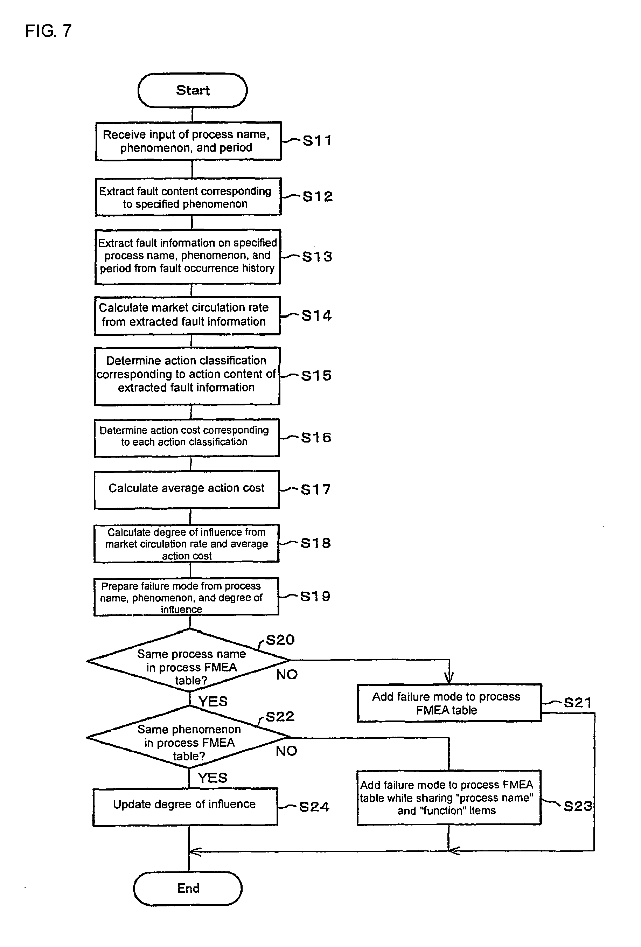

Next, a flow of influence degree calculation processing will be described with reference to a flow chart shown in FIG. 7. First, in S11, the extraction target information input processing part 14 receives the process name, phenomenon, and period as extraction target information input by a user. More specifically, the extraction target information input processing part 14 causes the output part 2A to display a display screen for receiving input of extraction target information and receives extraction target information input by the user in response to the display screen via the input part 2B. An example of extraction target information to be input is: the process name is "Element soldering," the phenomenon is "Missing soldering," and the period is "8/1/2003 to 8/1/2004."

Upon receipt of extraction target information, the extraction target information input processing part 14 stores the information in the extraction target information storage part 16. The extraction target information storage part 16 is realized, for example, by memory as a temporary (primary) storage device.

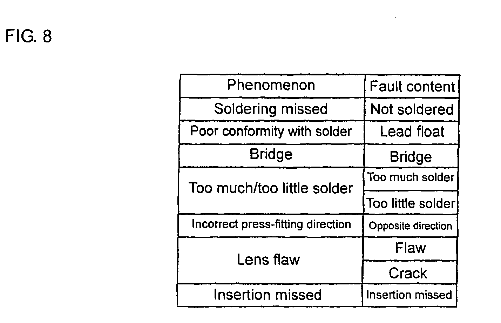

Next, in S12, the fault extraction part 17 reads information on the phenomenon specified by the user from the extraction target information storage part 16 and extracts information on fault content corresponding to the read phenomenon from a phenomena-fault correspondence table stored in the phenomena-fault correspondence table storage part 13. FIG. 8 shows an example of the phenomena-fault correspondence table. As shown in FIG. 8, the phenomena-fault correspondence table includes information showing association between the type of phenomena and fault content corresponding to each type of phenomena. The fault content shows information recorded as a fault in the fault occurrence history. Namely, it is anticipated that fault information is recorded in the fault occurrence history with various words and phrases and the phenomena-fault correspondence table shows a correspondence between fault information and the phenomena type in the process FMEA table. Thus, basically one or more fault contents are associated with one phenomenon.

The phenomena-fault correspondence table is prepared in advance by user input. Input processing for preparing a phenomena-fault correspondence table is performed by the phenomena-fault correspondence table input processing part 15. More specifically, the phenomena-fault correspondence table input processing part 15 causes the output part 2A to display a display screen for receiving input of the phenomena-fault correspondence table and receives phenomena-fault correspondence table information input by the user in response to the display screen via the input part 2B.

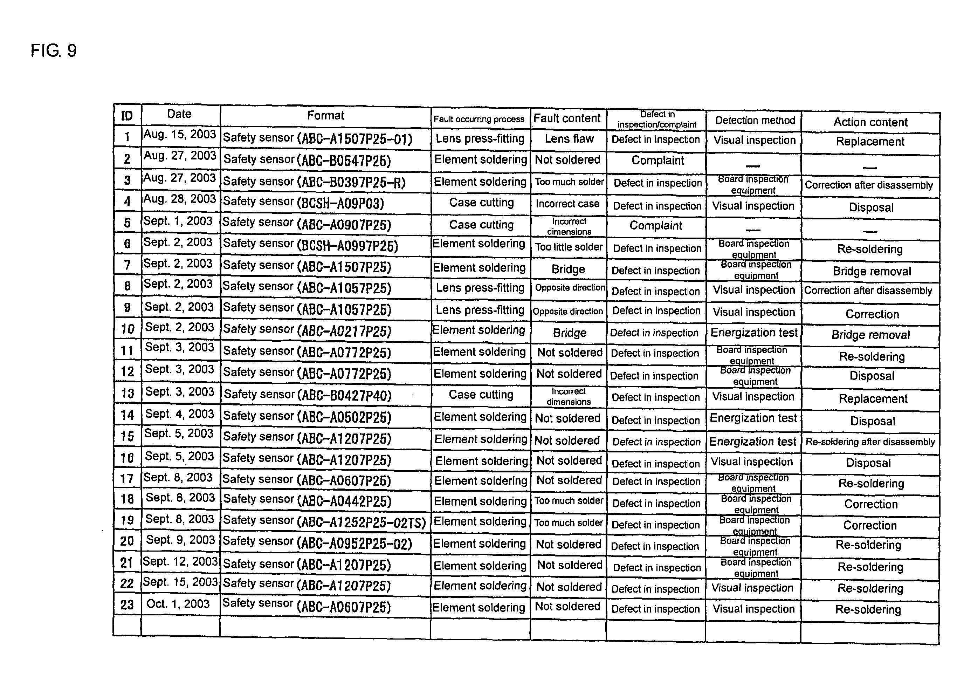

Next, in S13, the fault extraction part 17 extracts fault information corresponding to the process, phenomenon, and period specified by the user from the fault occurrence history stored in the fault occurrence history storage part 12. FIG. 9 shows an example of the fault occurrence history. As shown in FIG. 9, the fault occurrence history has the items of ID of fault information, date of manufacturing day of a product in which a fault occurred, format of information for identifying the product in which the fault occurred, fault occurrence process, fault content, information on whether the fault was detected by inspection in the production line or customer complaint (detection status information), detection method when the fault was detected by inspection in the production line, and action against the fault (action content information). Incidentally, all above items are not necessary as the items of the fault occurrence history and it is sufficient to provide only items required by at least one of the influence degree calculation processing, occurrence frequency calculation processing, and detection degree calculation processing.

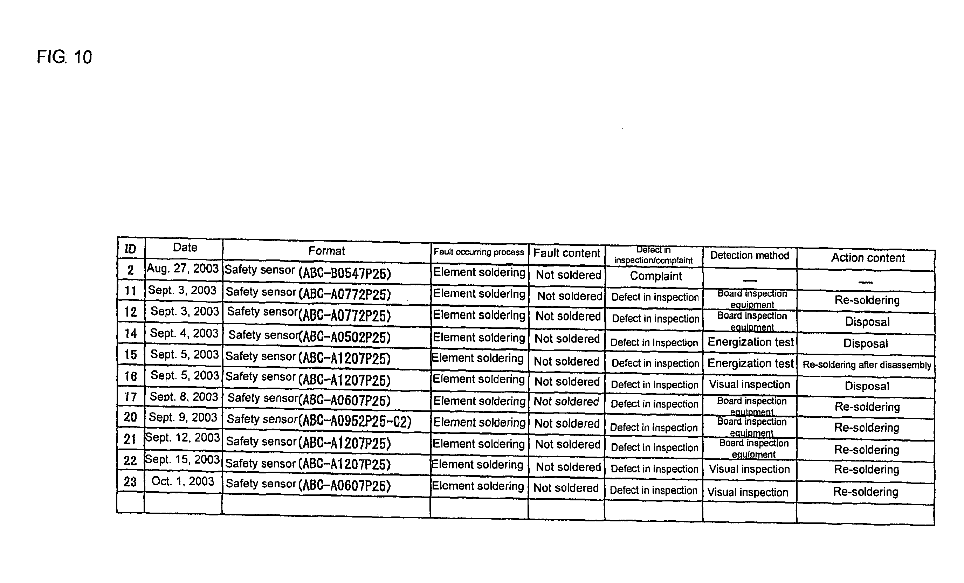

The fault extraction part 17 extracts fault information that matches the process specified in the fault occurrence process item, matches the fault content corresponding to the phenomenon specified in the fault content item, and contains the period specified in the date item from the fault occurrence history. FIG. 10 shows a result of extracting fault information whose process name is "Element soldering," whose phenomenon is "Missing soldering," and whose period is "8/1/2003 to 8/1/2004" from the fault occurrence history shown in FIG. 9.

The fault extraction part 17 stores the fault information extracted as described above in the history extraction result storage part 18. The history extraction result storage part 18 is realized, for example, by memory as a temporary (primary) storage device.

Next, in S14, the market outflow rate calculation part 41 reads the fault information extracted by the fault extraction part 17 from the history extraction result storage part 18 to calculate a market outflow rate. The market outflow rate is calculated by a formula (market outflow rate) = (number of complaints) / (total number of faults). Here, the number of complaints shows the number of pieces of fault information assumed to originate from customer complaints in the item of information on whether the fault was detected by inspection in the production line or customer complaint from among items of the fault occurrence history. That is, that a fault is detected by a customer complaint indicates that the relevant product is considered to have circulated in the market in a faulty state. The total number of faults shows the total number of pieces of fault information extracted by the fault extraction part 17. If, for example, the total number of faults is 1102 and the number of pieces of fault information originating from customer complaints is 1, the market outflow rate will be 1/1102 = 0.09%. After the market outflow rate is calculated, the market outflow rate calculation part 41 stores the calculated market outflow rate in the market outflow rate storage part 42. The market outflow rate storage part 42 is realized, for example, by memory as a temporary (primary) storage device.

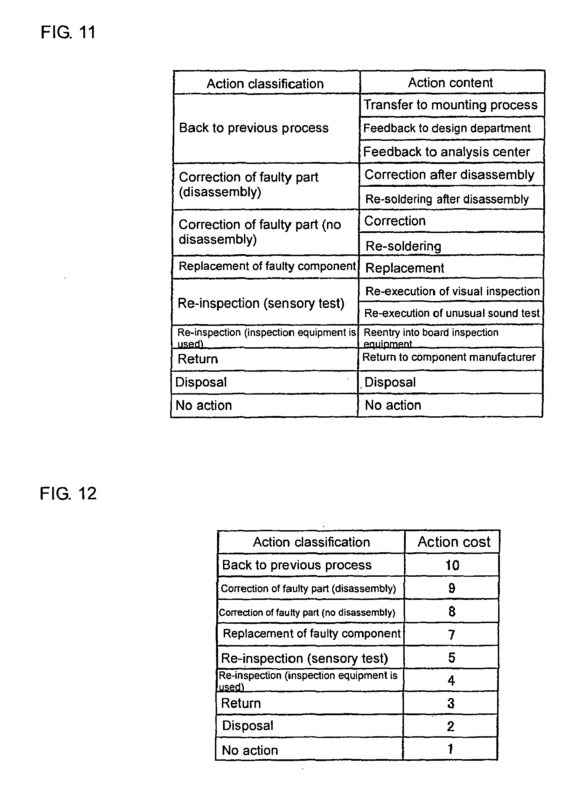

Next, in S15, the average action cost calculation part 37 reads information on the item of action against the fault from fault information stored in the history extraction result storage part 18 and extracted by the fault extraction part 17 to determine the action classification to be a higher-level concept than each action content contained in the read action items. The action content and the action classification are associated based on an action classification table stored in the action classification table storage part 34. FIG. 11 shows an example of the action classification table. As shown in FIG. 11, the action classification table includes information showing association between the type of action classification and action content corresponding to each action classification. That is, it is anticipated that action content information is recorded in the fault occurrence history with various words and phrases and the action classification table shows a correspondence between action content information and the action classification. Thus, basically one or more action contents are associated with one action classification. By using such an action classification table, an amount of information required for association with action costs can be reduced.

The action classification table is prepared in advance by user input. Input processing for preparing an action classification table is performed by the action classification table input processing part 31. More specifically, the action classification table input processing part 31 causes the output part 2A to display a display screen for receiving input of the action classification table and receives action classification table information input by the user in response to the display screen via the input part 2B.

If, for example, a variation of action content to be recorded in the fault information history is predetermined, the action cost can directly be calculated from the action content without using the above-described action classification table. In this case, the configuration of the action cost table input processing part 32 and the action cost table storage part 35 may not be provided.

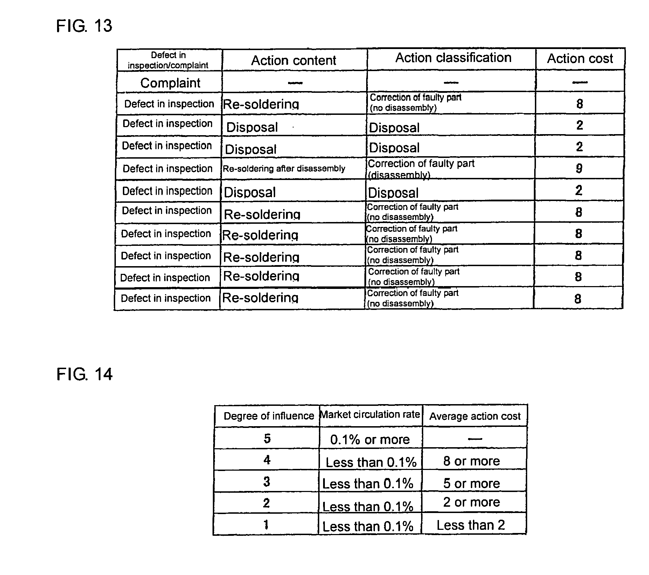

Next, in S16, the average action cost calculation part 37 calculates an action cost based on the action classification corresponding to the action content for each piece of fault information extracted by the fault extraction part 17. Here, the average action cost calculation part 37 calculates an action cost corresponding to each action classification based on an action cost table stored in the action cost table storage part 35. FIG. 12 shows an example of the action cost table. As shown in FIG. 12, the action cost table includes information showing association between the type of action classification and action cost corresponding to each action classification. The action cost is an index showing an influence on productivity by taking action of the corresponding action classification. The higher the action cost is, the greater the influence on productivity by taking action of the corresponding action classification is, that is, the greater the time and cost required for the action. FIG. 13 shows a result after adding information on the action classification and action cost to the extraction result of fault information shown in FIG. 10.

The action cost table is prepared in advance by user input. Input processing for preparing an action cost table is performed by the action cost table input processing part 32. More specifically, the action cost table input processing part 32 causes the output part 2A to display a display screen for receiving input of the action cost table and receives action cost table information input by the user in response to the display screen via the input part 2B.

Next, in S17, the average action cost calculation part 37 calculates an average action cost based on the action cost corresponding to each piece of fault information calculated in S16. The average action cost can be calculated by dividing a sum total of the action cost corresponding to each piece of fault information extracted by the fault extraction part 17 by the number of pieces of fault information extracted by the fault extraction part 17. In an example shown in FIG. 13, the average action cost will be (8 + 2 + 2 + 9 + 2 + 8 + 8 + 8 + 8 + 8)/ 10 = 6.3.

The average action cost calculation part 37 stores the average action cost calculated as described above in the average action cost storage part 38. The average action cost storage part 38 is realized, for example, by memory as a temporary (primary) storage device.

Next, in S18, the influence degree calculation part 39 calculates a degree of influence based on the market outflow rate calculated in S14 and the average action cost calculated in S17. Here, the influence degree calculation part 39 reads the market outflow rate from the market outflow rate storage part 42 and the average action cost from the average action cost storage part 38. Calculation of the degree of influence based on the market outflow rate and average action cost is performed based on an influence degree calculation table. FIG. 14 shows an example of the influence degree calculation table. As shown in FIG. 14, the influence degree calculation table includes data that enables determination of the degree of influence in accordance with a combination of the value of market outflow rate and value of average action cost. In an example shown in FIG. 14, if the market outflow rate is 0.1 % or more, the degree of influence will be a maximum value of 5 regardless of the average action cost. If the market outflow rate is less than 0.1 %, the degree of influence is 4 if the average action cost is 8 or more, the degree of influence is 3 if the average action cost is 5 or more and 8 or less, the degree of influence is 2 if the average action cost is 2 or more and 5 or less, and the degree of influence is 1 if the average action cost is less than 2. Relationships between the combination of the value of market outflow rate and value of average action cost and the degree of influence are not limited to those shown in FIG. 14 and may be changed in accordance with system design when necessary.

The influence degree calculation table is prepared in advance by user input. Input processing for preparing an influence degree calculation table is performed by the influence degree calculation table input processing part 33. More specifically, the influence degree calculation table input processing part 33 causes the output part 2A to display a display screen for receiving input of the influence degree calculation table and receives influence degree calculation table information input by the user in response to the display screen via the input part 2B.

The influence degree calculation part 39 stores the degree of influence calculated as described above in the influence degree storage part 40. The influence degree storage part 40 is realized, for example, by memory as a temporary (primary) storage device.

In the present embodiment, the degree of influence is determined based on the market outflow rate and average action cost, but the present invention is not limited to this. For example, the degree of influence may be determined by the market outflow rate only or the average action cost only. Or, the degree of influence may also be determined by any other index than the market outflow rate and average action cost. That is, any index that influences a time loss and/or pecuniary loss caused by a fault corresponding to a phenomenon specified by a user and for which a value can be calculated from a fault occurrence history by data processing may be used as an index for determining the degree of influence.

Next, in S19, the failure mode preparing part 22 prepares a failure mode based on a degree of influence calculated by the influence degree calculation part 19 and information on the process name and phenomenon corresponding to the degree of influence as extraction target information. Here, the failure mode preparing part 22 reads information on the degree of influence from the influence degree storage part 40 and information on the process name and phenomenon from the extraction target information storage part 16.

The failure mode preparing part 22 stores the failure mode prepared as described above in the failure mode storage part 23. The failure mode storage part 23 is realized, for example, by memory as a temporary (primary) storage device.

Next, in S20 to S24, the failure mode addition part 24 performs processing of adding the failure mode prepared by the failure mode preparing part 22 to a process FMEA table. Here, the failure mode addition part 24 reads a failure mode to be added from the failure mode storage part 23 and reads/writes information to/from the process FMEA table stored in the process FMEA table storage part 11.

First, in S20, the failure mode addition part 24 determines whether the process name of the failure mode to be added exists in the process FMEA table. If the process name of the failure mode to be added does not exist in the process FMEA table (NO in S20), all items of the failure mode to be added are added unchanged to the process FMEA table as a new failure mode (S21), thereby completing update processing of the process FMEA table.

If, on the other hand, the process name of the failure mode to be added exists in the process FMEA table (YES in S20), the failure mode addition part 24 determines in S22 whether the phenomenon of the failure mode to be added exists in the process FMEA table. If the phenomenon of the failure mode to be added does not exist in the process FMEA table (NO in S22), the failure mode addition part 24 adds the phenomenon and degree of influence to the process FMEA table while sharing the items of the process name and function (S23), thereby completing update processing of the process FMEA table.

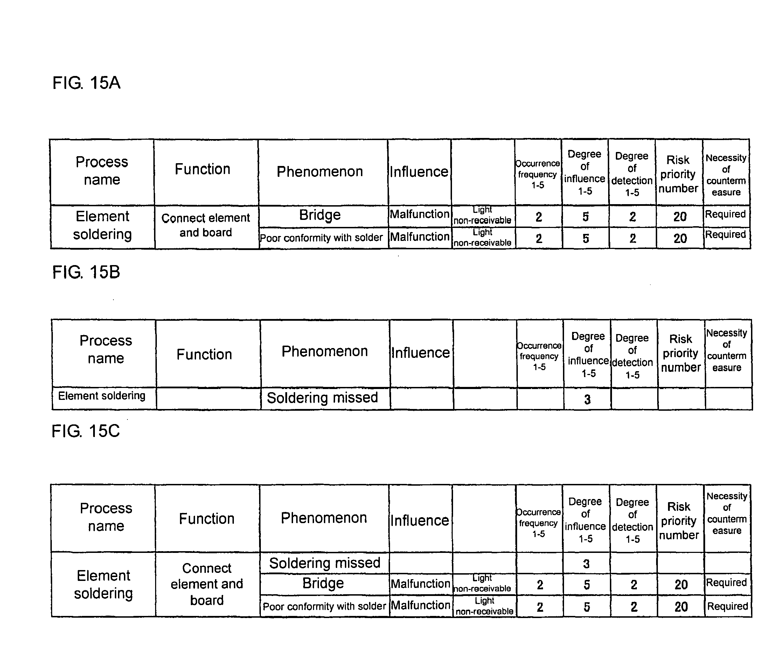

FIG. 15A shows an example of the process FMEA table before failure mode addition processing. FIG. 15B shows an example of the failure mode to be added. In this example, the process name of the failure mode to be added exists in the process FMEA table, but the phenomenon does not exist. In this case, as shown in FIG. 15C, a new phenomenon "Missing soldering" is added while sharing the process name item "Element soldering" and the function item "Connect element and board" and a corresponding degree of influence is recorded.

If, on the other hand, the phenomenon of the failure mode to be added exists in the process FMEA table (YES in S22), the failure mode addition part 24 updates the degree of influence item in a failure mode already existing in the process FMEA table (S24), thereby completing update processing of the process FMEA table.

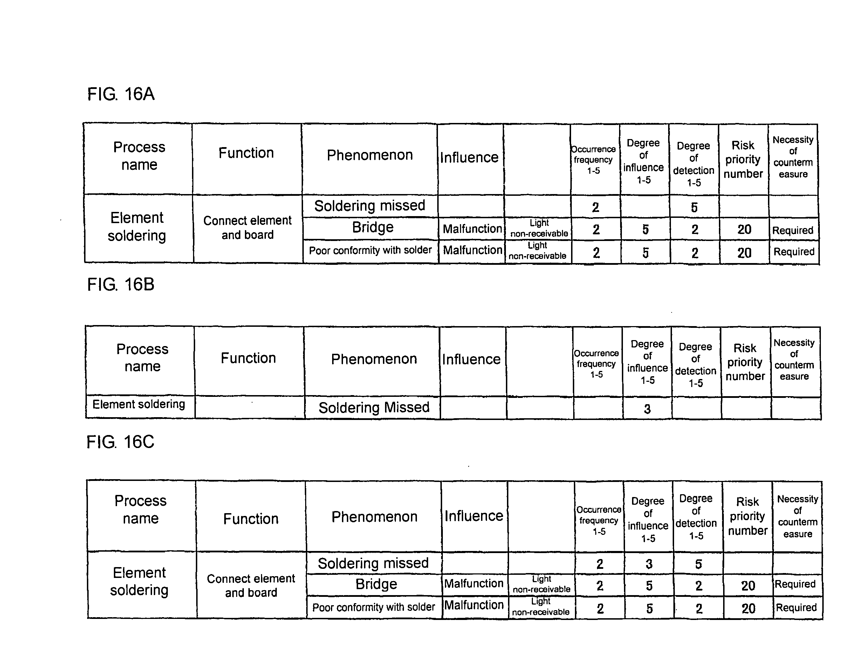

FIG. 16A shows an example of the process FMEA table before failure mode addition processing. FIG. 16B shows an example of the failure mode to be added. In this example, the process name and phenomenon of the failure mode to be added exist in the process FMEA table. In this case, as shown in FIG. 16C, a value is added to the degree of influence item of the failure mode corresponding to the phenomenon "Missing soldering."

### (Configuration of the occurrence frequency calculation part)

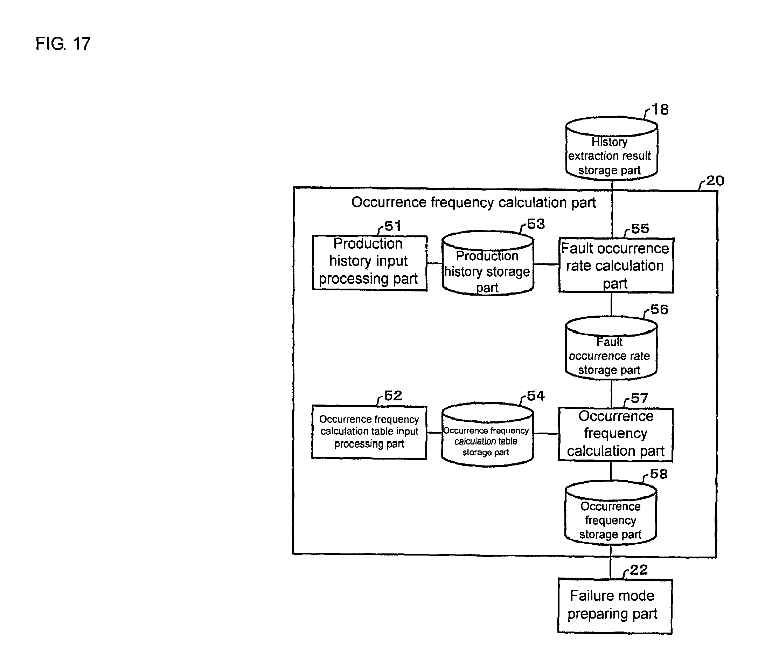

Next, the configuration of the occurrence frequency calculation part 20 will be described. FIG. 17 shows an outline function configuration of the occurrence frequency calculation part 20. As shown in FIG. 17, the occurrence frequency calculation part 20 includes a production history input processing part 51, an occurrence frequency calculation table input processing part 52, a production history storage part (processing history storage device) 53, an occurrence frequency calculation table storage part 54, a fault occurrence rate calculation part 55, a fault occurrence rate storage part 56, an occurrence frequency calculation part 57, and an occurrence frequency storage part 58.

The production history input processing part 51 performs processing of receiving information on a production history input at the production history input terminal 4 to store in the production history storage part 53 as a production history (processing history information). The occurrence frequency calculation table input processing part 52 performs processing of receiving information on an occurrence frequency calculation table input by a user to store in the occurrence frequency calculation table storage part 54.

The fault occurrence rate calculation part 55 performs processing of reading fault information extracted by the fault extraction part 17 and calculating a fault occurrence rate by referencing the production history. The fault occurrence rate storage part 56 stores the fault occurrence rate calculated by the fault occurrence rate calculation part 55.

The occurrence frequency calculation part 57 performs processing of reading the fault occurrence rate from the fault occurrence rate storage part 56 and calculating an occurrence frequency based on the occurrence frequency calculation table stored in the occurrence frequency calculation table storage part 54. The occurrence frequency storage part 58 stores the occurrence frequency calculated by the occurrence frequency calculation part 57.

### (Flow of occurrence frequency calculation processing)

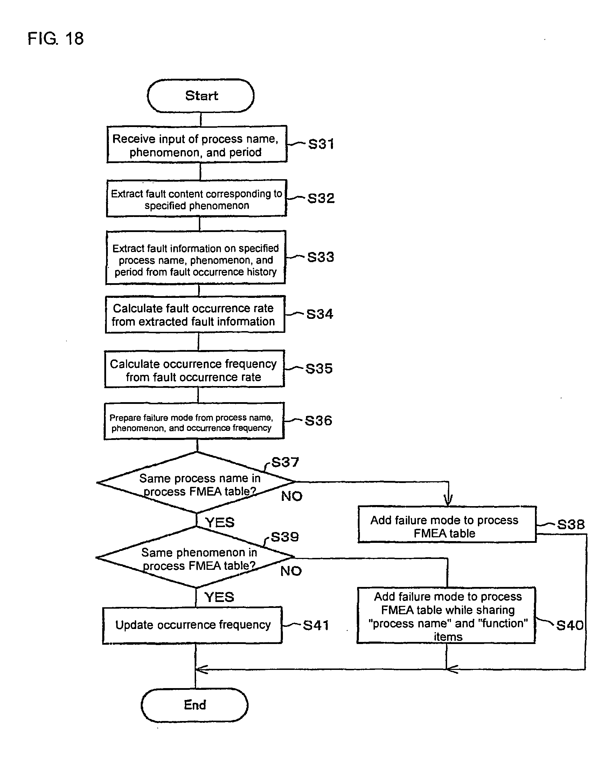

Next, the flow of occurrence frequency calculation processing will be described with reference to a flow chart shown in FIG. 18. Since processing in S31 to S33 is the same as that in S11 to S13 shown in FIG. 7, description thereof is not repeated.

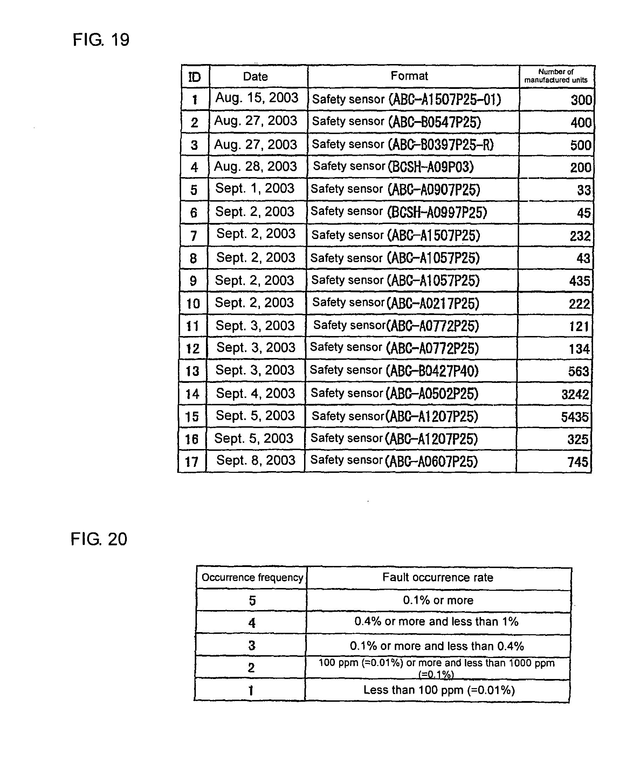

When, in S33, fault information is extracted by the fault extraction part 17, the fault occurrence rate calculation part 55 calculates, in S34, a fault occurrence rate. The fault occurrence rate is calculated by a formula (fault occurrence rate) = (total number of faults) / (total number of manufactured units). Here, the total number of faults shows the total number of pieces of fault information stored in the history extraction result storage part 18. The total number of manufactured units shows the total number of manufactured units determined based on a production history stored in the production history storage part 53. FIG. 19 shows an example of the production history. As shown in FIG. 19, the production history has the items of ID of production history, date of manufacturing day, format of information for identifying a manufactured product, and number of manufactured units.

The production history is recorded in the production history storage part 53 by the production history input processing part 51 after production history information input at the production history input terminal 4 is transferred to the process control apparatus 2.

The fault occurrence rate calculation part 55 calculates from such a production history the total number of manufactured units based on production history information corresponding to the period specified by the user and corresponding to the format of a product manufactured by the process of the process name specified by the user.

If, for example, the total number of faults is 1102 and the total number of manufactured units is 10 million, the fault occurrence rate will be 1102 / 10 million = 0.011% (110 ppm). After the fault occurrence rate is calculated, the fault occurrence rate calculation part 55 stores the calculated fault occurrence rate in the fault occurrence rate storage part 56. The fault occurrence rate storage part 56 is realized, for example, by memory as a temporary (primary) storage device.

Next, in S35, the occurrence frequency calculation part 57 reads the fault occurrence rate from the fault occurrence rate storage part 56 and calculates an occurrence frequency based on an occurrence frequency calculation table stored in the occurrence frequency calculation table storage part 54. FIG. 20 shows an example of the occurrence frequency calculation table. As shown in FIG. 20, the occurrence frequency calculation table includes data that enables determination of the occurrence frequency in accordance with the value of fault occurrence rate. In an example shown in FIG. 20, if the fault occurrence rate is 1% or more, the occurrence frequency is 5, if the fault occurrence rate is 0.4% or more and less than 1%, the occurrence frequency is 4, if the fault occurrence rate is 0.1 % or more and less than 0.4%, the occurrence frequency is 3, if the fault occurrence rate is 100 ppm (0.01 %) or more and less than 1000 ppm (0.1 %), the occurrence frequency is 2, and if the fault occurrence rate is less than 100 ppm (0.01 %), the occurrence frequency is 1. Incidentally, relationships between the value of fault occurrence rate and the occurrence frequency are not limited to those of the example shown in FIG. 20 and may be changed in accordance with system design when necessary.

The occurrence frequency calculation table is prepared in advance by user input. Input processing for preparing an occurrence frequency calculation table is performed by the occurrence frequency calculation table input processing part 52. More specifically, the occurrence frequency calculation table input processing part 52 causes the output part 2A to display a display screen for receiving input of the occurrence frequency calculation table and receives occurrence frequency calculation table information input by the user in response to the display screen via the input part 2B.

The occurrence frequency calculation part 57 stores the occurrence frequency calculated as described above in the occurrence frequency storage part 58. The occurrence frequency storage part 58 is realized, for example, by memory as a temporary (primary) storage device.

In the present embodiment, the occurrence frequency is determined based on the fault occurrence rate, but the present invention is not limited to this and may be determined by any other index than the fault occurrence rate. That is, any index that shows an occurrence frequency of a fault corresponding to a phenomenon specified by a user and for which a value can be calculated from a fault occurrence history by data processing may be used as an index for determining the occurrence frequency.

Hereinafter, since processing in S36 to S41 is the same as the processing in S19 to S24 shown in FIG. 7 by replacing "degree of influence" with "occurrence frequency," description thereof is not repeated.

If, after taking countermeasure to improve a fault, an occurrence frequency as described above is calculated again, as shown in FIG. 4B, the failure mode preparing part 22 may add an item of a post-countermeasure occurrence frequency to the failure mode to record the calculated occurrence frequency in the pertinent item. With such a failure mode being added to a process FMEA table by the failure mode addition part 24, it becomes possible to know a change in occurrence frequency before and after taking countermeasure and thus to evaluate effects of improvement countermeasure.

### (Configuration of the detection degree calculation part)

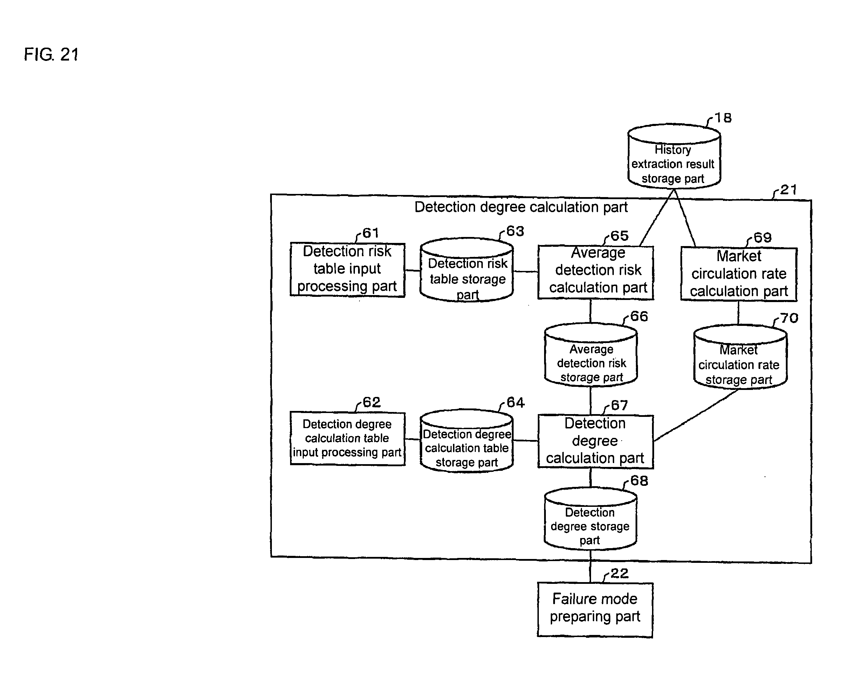

Next, the configuration of the detection degree calculation part 21 will be described. FIG. 21 shows an outline function configuration of the detection degree calculation part 21. As shown in FIG. 21, the detection degree calculation part 21 includes a detection risk table input processing part 61, a detection degree calculation table input processing part 62, a detection risk table storage part 63, a detection degree calculation table storage part 64, an average detection risk calculation part 65, an average detection risk storage part 66, a detection degree calculation part 67, a detection degree storage part 68, a market outflow rate calculation part 69, and a market outflow rate storage part 70.

The detection risk table input processing part 61 performs processing of receiving information on a detection risk table input by a user to store in the detection risk table storage part 63. The detection degree calculation table input processing part 62 performs processing of receiving information on a detection degree calculation table input by a user to store in the detection degree calculation table storage part 64.

The average detection risk calculation part 65 calculates a detection risk based on a detection method for each piece of fault information extracted by the fault extraction part 17. Then, the average detection risk calculation part 65 calculates an average detection risk based on the calculated detection risk corresponding to each piece of fault information. The average detection risk storage part 66 stores the average detection risk calculated by the average detection risk calculation part 65.

The market outflow rate calculation part 69 performs processing of reading fault information extracted by the fault extraction part 17 and calculating a market outflow rate. The market outflow rate storage part 70 stores the market outflow rate calculated by the market outflow rate calculation part 69.

The detection degree calculation part 67 performs processing of calculating a degree of detection based on the market outflow rate calculated by the market outflow rate calculation part 69 and the average detection risk calculated by the average detection risk calculation part 65. The detection degree storage part 68 stores the degree of detection calculated by the detection degree calculation part 67.

### (Flow of detection degree calculation processing)

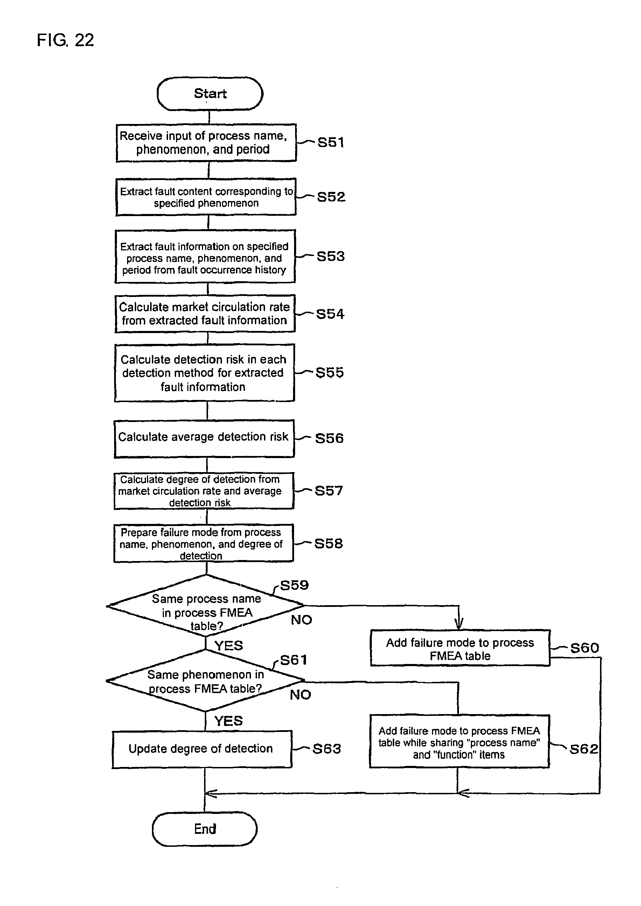

Next, the flow of detection degree calculation processing will be described with reference to a flow chart shown in FIG. 22. Since processing in S51 to S54 is the same as that in S11 to S14 shown in FIG. 7, description thereof is not repeated.

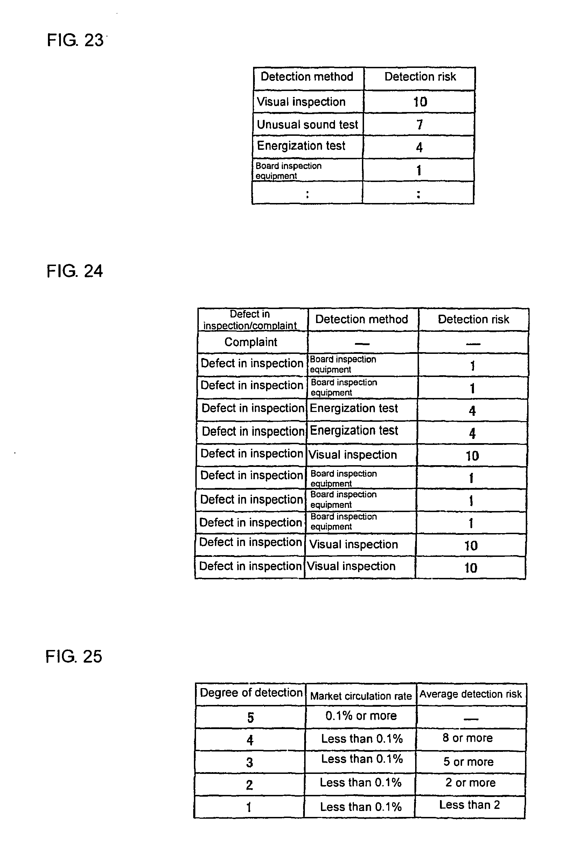

In S55, the average detection risk calculation part 65 calculates a detection risk based on a detection method for each piece of fault information extracted by the fault extraction part 17. Here, the average detection risk calculation part 65 calculates a detection risk corresponding to each detection method based on the detection risk table stored in a detection risk table storage part 63. FIG. 23 shows an example of the detection risk table. As shown in FIG. 23, the detection risk table includes information showing association between the type of detection method and a detection risk corresponding to each detection method. The detection risk is an index showing a possibility that an error could occur in fault detection by a corresponding detection method. The higher the detection risk, the greater the possibility that a detection error could occur in the corresponding detection method. FIG. 24 shows an example of a result of adding detection risk information to an extraction result of fault information.

The detection risk table is prepared in advance by user input. Input processing for preparing a detection risk table is performed by the detection risk table input processing part 61. More specifically, the detection risk table input processing part 61 causes the output part 2A to display a display screen for receiving input of the detection risk table and receives detection risk table information input by the user in response to the display screen via the input part 2B.

In calculation processing of the degree of influence, the action content shown by the processing item of fault information and the action classification table showing a correspondence to the action classification are used. Likewise, the detection method shown by the detection method item of fault information and a detection method classification table showing a correspondence to detection method classification showing a higher-level concept may also be used. In this way, the amount of information required for association with detection risks can be reduced even when detection method information is recorded in the fault occurrence history with various words and phrases. However, since there are only few variations of the detection method and it is anticipated that words and phrases recorded in the fault occurrence history are considerably restricted, a configuration without the detection method classification table like the present embodiment may work satisfactorily.

Next, in S56, the average detection risk calculation part 65 calculates an average detection risk based on a detection risk corresponding to each piece of fault information calculated in S55. The average detection risk is determined by dividing the sum total of the detection risk corresponding to each piece of fault information extracted by the fault extraction part 17 by the number of faults extracted by the fault extraction part 17. In an example shown in FIG. 24, for example, the average detection risk will be (1 + 1 + 4 + 4 + 10 + 1 + 1 + 1 + 10 + 10) / 10 = 4.3.

The average detection risk calculation part 65 stores the average detection risk calculated as described above in the average detection risk storage part 66. The average detection risk storage part 66 is realized, for example, by memory as a temporary (primary) storage device.

Next, in S57, the detection degree calculation part 67 calculates a degree of detection based on the market outflow rate calculated in S54 and the average detection risk calculated in S56. Here, the detection degree calculation part 67 reads the market outflow rate from the market outflow rate storage part 70 and the average detection risk from the average detection risk storage part 66. Calculation of the degree of detection based on the market outflow rate and average detection risk is performed based on a detection degree calculation table. FIG. 25 shows an example of the detection degree calculation table. As shown in FIG. 25, the detection degree calculation table includes data that enables determination of the degree of detection in accordance with a combination of the value of market outflow rate and value of average detection risk. In an example shown in FIG. 25, if the market outflow rate is 0.1 % or more, the degree of detection will be a maximum value of 5 regardless of the average detection risk. If the market outflow rate is less than 0.1 %, the degree of detection is 4 if the average detection risk is 8 or more, the degree of detection is 3 if the average detection risk is 5 or more and 8 or less, the degree of detection is 2 if the average detection risk is 2 or more and 5 or less, and the degree of detection is 1 if the average detection risk is less than 2. Relationships between the combination of the value of market outflow rate and value of average detection risk and the degree of detection are not limited to those shown in FIG. 25 and may be changed in accordance with system design when necessary.

The detection degree calculation table is prepared in advance by user input. Input processing for preparing a detection degree calculation table is performed by the detection degree calculation table input processing part 62. More specifically, the detection degree calculation table input processing part 62 causes the output part 2A to display a display screen for receiving input of the detection degree calculation table and receives detection degree calculation table information input by the user in response to the display screen via the input part 2B.

The detection degree calculation part 67 stores the degree of detection calculated as described above in the detection degree storage part 68. The detection degree storage part 68 is realized, for example, by memory as a temporary (primary) storage device.

In the present embodiment, the degree of detection is determined based on the market outflow rate and average detection risk, but the present invention is not limited to this. For example, the degree of detection may be determined by the market outflow rate only or the average detection risk only. Or, the degree of detection may also be determined by any other index than the market outflow rate and average detection risk. That is, any index that shows difficulty of detecting a fault corresponding to a phenomenon specified by a user and for which a value can be calculated from a fault occurrence history by data processing may be used as an index for determining the degree of detection.

Hereinafter, since processing in S58 to S63 is the same as the processing in S19 to S24 shown in FIG. 7 by replacing "degree of influence" with "degree of detection," description thereof is not repeated.

If, as shown in FIG. 4B, after taking countermeasure to improve a fault, a degree of detection as described above is calculated again, the failure mode preparing part 22 may add an item of a post-countermeasure degree of detection to the failure mode to record the calculated degree of detection in the pertinent item. With such a failure mode being added to a process FMEA table by the failure mode addition part 24, it becomes possible to know a change in degree of detection before and after taking countermeasure and thus to evaluate effects of improvement countermeasure.

### (Configuration of the risk priority number calculation part)

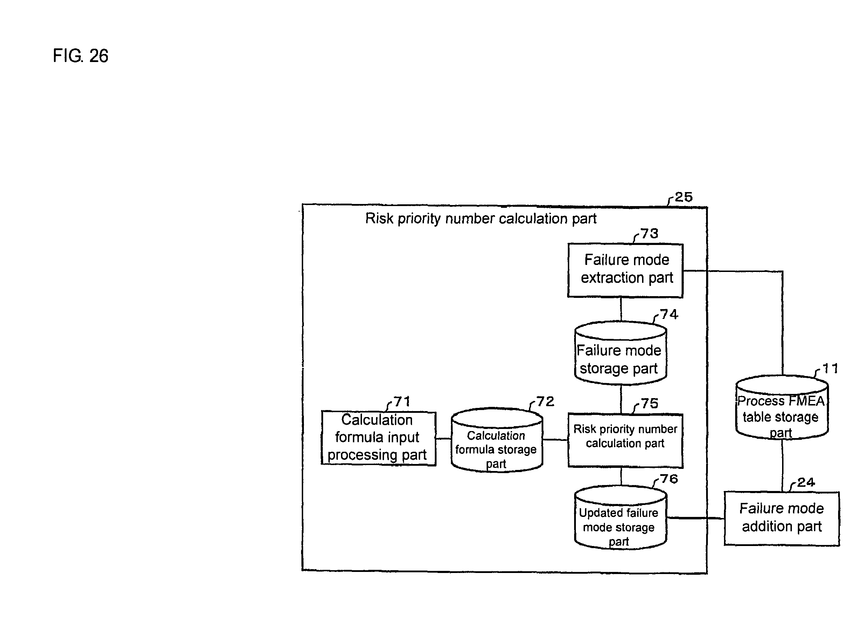

Next, the configuration of the risk priority number calculation part 25 will be described. FIG. 26 shows an outline function configuration of the risk priority number calculation part 25. As shown in FIG. 25, the risk priority number calculation part 25 includes a calculation formula input processing part 71, a calculation formula storage part 72, a failure mode extraction part 73, a failure mode storage part 74, a risk priority number calculation part 75, and an updated failure mode storage part 76.

The calculation formula input processing part 71 performs processing of receiving information on a calculation formula used for calculating a risk priority number input by a user to store in the calculation formula storage part 72.

The failure mode extraction part 73 performs processing of reading a specific failure mode from the process FMEA table stored in the process FMEA table storage part 11. The failure mode storage part 74 stores a failure mode in which the degree of influence, occurrence frequency, and degree of detection are input.

The risk priority number calculation part 75 performs processing of reading a failure mode from the failure mode storage part 74 and calculating a risk priority number based on the degree of influence, occurrence frequency, and degree of detection in the failure mode. The updated failure mode storage part 76 stores the failure mode to which information on the risk priority number calculated by the risk priority number calculation part 75 is added.

### (Flow of risk priority number calculation processing)

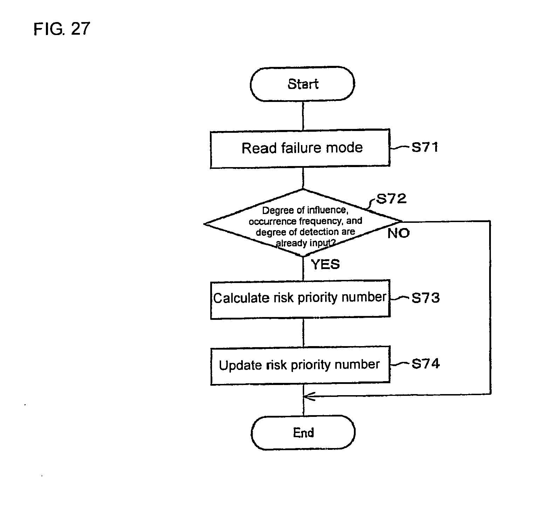

Next, the flow of risk priority number calculation processing will be described with reference to a flow chart shown in FIG. 27. First, in S71, the failure mode extraction part 73 reads a specific failure mode from the process FMEA table stored in the process FMEA table storage part 11. Then, in S72, the failure mode extraction part 73 determines whether the degree of influence, occurrence frequency, and degree of detection have been input in the read failure mode. If NO in S72, that is, the degree of influence, occurrence frequency, or degree of detection has not been input, processing is terminated because a risk priority number cannot be calculated.

If YES in S72, that is, the degree of influence, occurrence frequency, and degree of detection have been input, first the failure mode extraction part 73 stores the failure mode in the failure mode storage part 74. The failure mode storage part 74 is realized, for example, by memory as a temporary (primary) storage device.

Then, the risk priority number calculation part 75 reads the failure mode from the failure mode storage part 74 and calculates a risk priority number based on the degree of influence, occurrence frequency, and degree of detection of the failure mode (S73). The risk priority number is calculated by a formula (risk priority number) = (degree of influence) X (occurrence frequency) X (degree of detection).

The formula for calculating the risk priority number is stored in the calculation formula storage part 72, and the risk priority number calculation part 75 performs the above calculation by reading this calculation formula stored in the calculation formula storage part 72. The calculation formula stored in the calculation formula storage part 72 is prepared in advance by user input. Input processing for preparing this calculation formula is performed by the calculation formula input processing part 71. More specifically, the calculation formula input processing part 71 causes the output part 2A to display a display screen for receiving input of the calculation formula and receives calculation formula information input by the user in response to the display screen via the input part 2B.

In the present embodiment, the risk priority number is calculated as a product of the degree of influence, occurrence frequency, and degree of detection as shown by the above formula, but the present invention is not limited to this and any value that changes in accordance with a magnitude of each value of the degree of influence, occurrence frequency, and degree of detection may be used. For example, the risk priority number may be defined as a sum of the degree of influence, occurrence frequency, and degree of detection, or an average value thereof. Further, the risk priority number may be defined as a value that changes in accordance with a magnitude of at least one value of the degree of influence, occurrence frequency, and degree of detection. If, for example, it is determined that the degree of detection need not be considered as an index for determining necessity of countermeasure, the risk priority number may be determined based one two factors of the degree of influence and occurrence frequency.

Next, in S74, the risk priority number calculation part 75 stores the failure mode to which information on the risk priority number calculated in S73 has been added in the updated failure mode storage part 76. The updated failure mode storage part 76 is realized, for example, by memory as a temporary (primary) storage device.

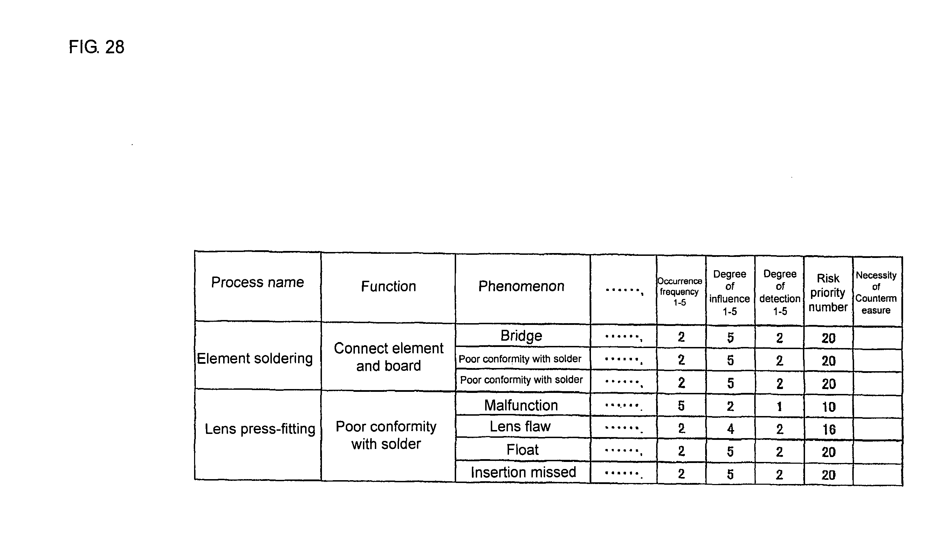

Then, the failure mode addition part 24 performs processing of adding the failure mode to which information on the risk priority number has been added from the updated failure mode storage part 76 to the process FMEA table, thereby completing update processing of the risk priority number in the failure mode in the process FMEA table (S74). FIG. 28 shows a state in which the risk priority number has been input for each failure mode in the process FMEA table.

Calculation processing of the risk priority number shown in FIG. 27 may be performed, for example, periodically or at a time when data is updated in the process FMEA table. If calculation processing is performed periodically, for example, processing shown in FIG. 27 may be performed repeatedly for all failure modes recorded in the process FMEA table or making the rounds periodically of each group after dividing the failure modes recorded in the process FMEA table into a plurality of groups. If calculation processing is performed at a time when data is updated in the process FMEA table, for example, processing shown in FIG. 27 may be performed only for an updated failure mode.

If, as shown in FIG. 4B, after taking countermeasure to improve a fault, a risk priority number as described above is calculated again, the failure mode preparing part 22 may add an item of a post-countermeasure risk priority number to the failure mode to record the calculated risk priority number in the pertinent item. With such a failure mode being added to a process FMEA table by the failure mode addition part 24, it becomes possible to know a change in risk priority number before and after taking countermeasure and thus to evaluate effects of improvement countermeasure.

### (Configuration of the countermeasure necessity calculation part)

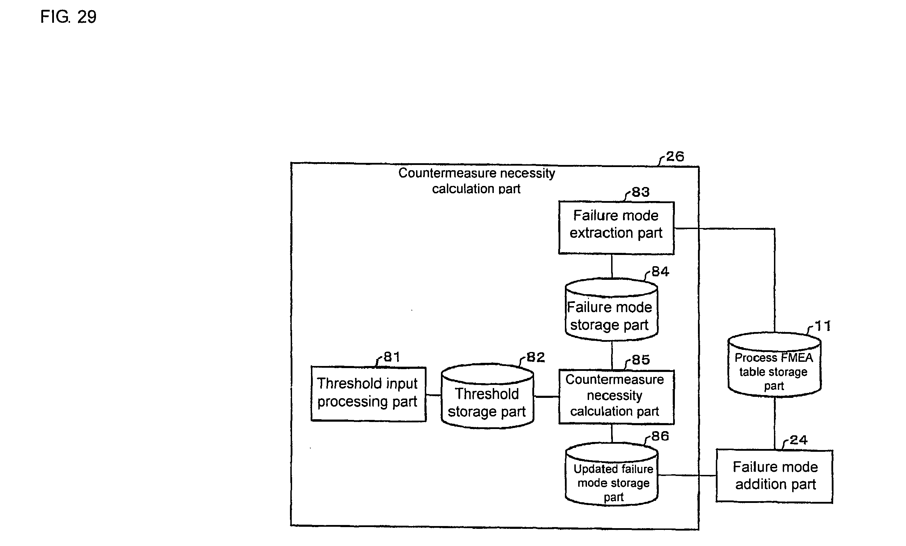

Next, the configuration of the countermeasure necessity calculation part 26 will be described. FIG. 29 shows an outline function configuration of the countermeasure necessity calculation part 26. As shown in FIG. 29, the countermeasure necessity calculation part 26 includes a threshold input processing part 81, a threshold storage part 82, a failure mode extraction part 83, a failure mode storage part 84, a countermeasure necessity calculation part 85, and an updated failure mode storage part 86.

The threshold input processing part 81 performs processing of receiving information on a threshold input by a user and used for determining necessity of countermeasure to store in the threshold storage part 82.

The failure mode extraction part 83 performs processing of reading a specific failure mode from the process FMEA table stored in the process FMEA table storage part 11. The failure mode storage part 84 stores a failure mode in which a risk priority number is input.

The countermeasure necessity calculation part 85 performs processing of reading a failure mode from the failure mode storage part 84 and determining necessity of countermeasure based on the risk priority number in the failure mode. The updated failure mode storage part 86 stores a failure mode to which information on necessity of countermeasure calculated by the countermeasure necessity calculation part 85 has been added.

### (Flow of countermeasure necessity calculation processing)

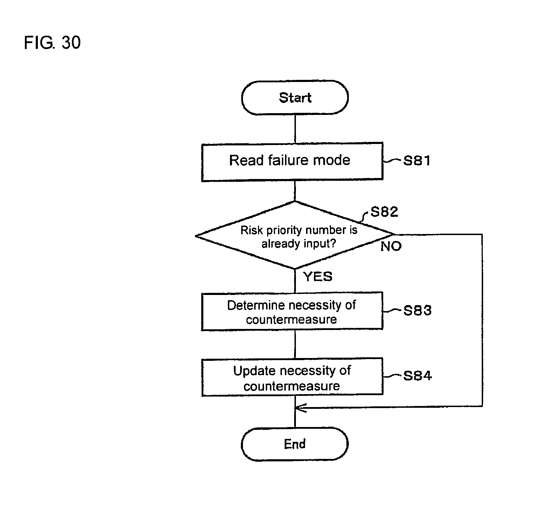

Next, the flow of countermeasure necessity calculation processing will be described with reference to a flow chart shown in FIG. 30. First, in S81, the failure mode extraction part 83 reads a specific failure mode from the process FMEA table stored in the process FMEA table storage part 11. Then, in S82, the failure mode extraction part 83 determines whether a risk priority number has been input in the read failure mode. If NO in S82, that is, no risk priority number has been input, processing is terminated because necessity of countermeasure cannot be calculated.

If YES in S82, that is, a risk priority number has been input, first, the failure mode extraction part 83 stores the failure mode in the failure mode storage part 84. The failure mode storage part 84 is realized, for example, by memory as a temporary (primary) storage device.

Then, the countermeasure necessity calculation part 85 reads the failure mode from the failure mode storage part 84 to determine necessity of countermeasure based on the risk priority number in the failure mode (S83). Necessity of countermeasure is determined by whether or not the risk priority number is equal to or larger than a predetermined threshold. That is, if the risk priority number is equal to or larger than the predetermined threshold, countermeasure is determined to be necessary.

The above threshold is stored in the threshold storage part 82 and the countermeasure necessity calculation part 85 makes the above determination by reading the threshold stored in the threshold storage part 82. The threshold stored in the threshold storage part 82 is prepared in advance by user input. Input processing for preparing this threshold is performed by the threshold input processing part 81. More specifically, the threshold input processing part 81 causes the output part 2A to display a display screen for receiving input of the threshold and receives threshold information input by the user in response to the display screen via the input part 2B.

Next, in S84, the countermeasure necessity calculation part 85 stores a failure mode to which information on necessity of countermeasure determined in S83 has been added in the updated failure mode storage part 86. The updated failure mode storage part 86 is realized, for example, by memory as a temporary (primary) storage device.

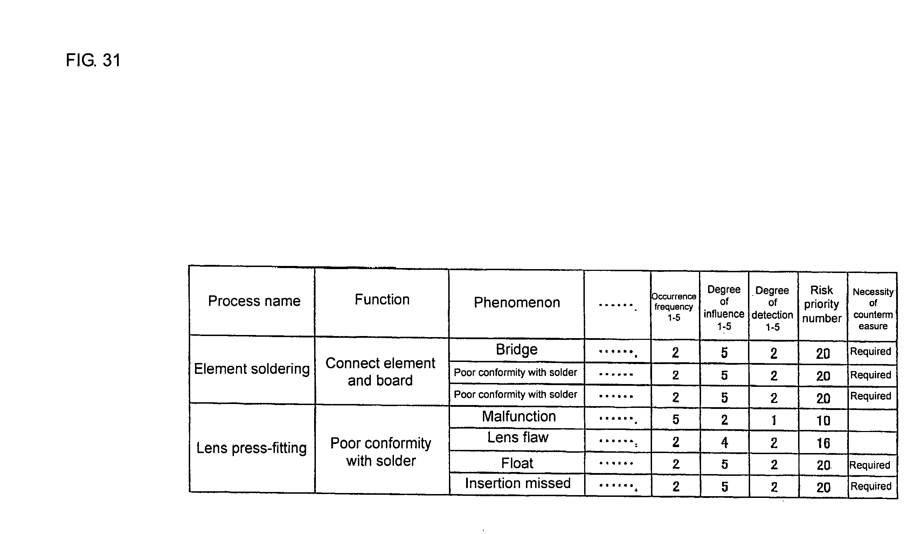

Then, the failure mode addition part 24 performs processing of adding a failure mode to which information on necessity of countermeasure has been added from the updated failure mode storage part 86 to the process FMEA table, thereby completing update processing of necessity of countermeasure in the failure mode in the process FMEA table (S84). FIG. 31 shows a state in which necessity of countermeasure has been input for each failure mode in the process FMEA table.

Calculation processing of necessity of countermeasure shown in FIG. 30 may be performed, for example, periodically or at a time when data is updated in the process FMEA table. If calculation processing is performed periodically, for example, processing shown in FIG. 30 may be performed repeatedly for all failure modes recorded in the process FMEA table or making the rounds periodically of each group after dividing the failure modes recorded in the process FMEA table into a plurality of groups. If calculation processing is performed at a time when data is updated in the process FMEA table, for example, processing shown in FIG. 30 may be performed only for an updated failure mode. Since necessity of countermeasure cannot be calculated if no risk priority number is determined, processing shown in FIG. 30 may be performed only for the relevant failure mode when update processing of the risk priority number is performed.

### (Application examples other than process FMEA)

In the present embodiment, the process control apparatus 2 for preparing/updating a process FMEA table used for process control in a production system, but the present invention can be applied to various fault management apparatuses controlling reliability analysis and fault factor analysis of management targets by the technique of FMEA. Application examples of FMEA include planning/development, design, components, production, testing, construction, operation, and facilities of a product life cycle.

Here, design FMEA will be described as an application example other than the process FMEA. The design FMEA is a design technique for a specific product to examine product designs based on a design FMEA table as a listing of information such as the function, failures, influence, and countermeasure for each component (management target) provided with the product.

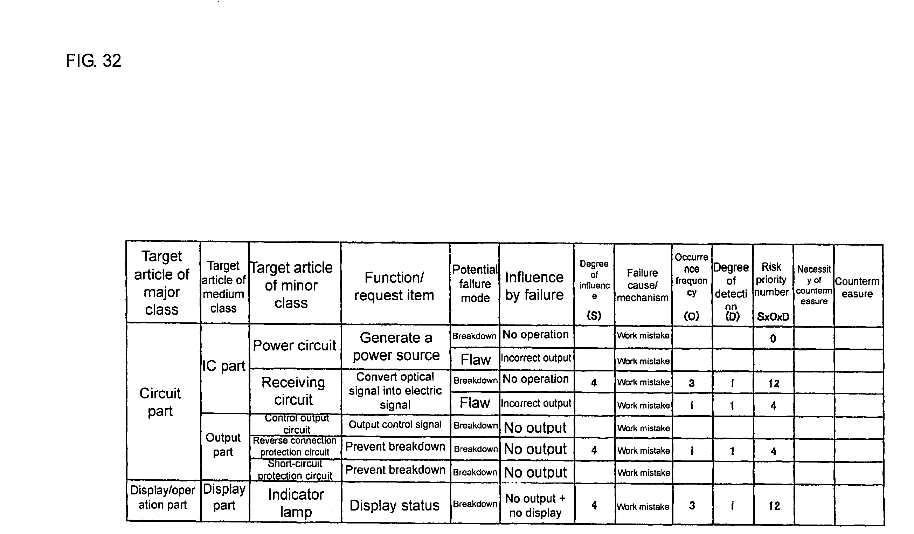

FIG. 32 shows an example of the design FMEA table. As shown in FIG. 32, the design FMEA table has the items of target article of major class, target article of medium class, target article of minor class, function/request item, potential failure mode, influence of failure, degree of influence, failure cause/mechanism, occurrence frequency, degree of detection, risk priority number, necessity of countermeasure, and countermeasure in which information to show the type of failure for each potential failure mode is recorded.

Among the above items, the target article of major class, target article of medium class, and target article of minor class are items showing the name of each class when components contained in a product are classified into a plurality of classes. The function/request item is an item showing functions of the component or required specifications. The potential failure mode is an item showing the type of failure anticipated to occur in the component. The influence of failure is an item showing an influence when an applicable failure occurs. The failure cause/mechanism is an item showing factors causing the applicable failure. The influence, occurrence frequency, degree of detection, risk priority number, necessity of countermeasure, and countermeasure are the same items as those in a process FMEA table.

The items of influence, occurrence frequency, degree of detection, risk priority number, and necessity of countermeasure in the design FMEA table as described above can be calculated by the same configuration as that of the process control apparatus 2 described above. That is, the influence, occurrence frequency, degree of detection, risk priority number, and necessity of countermeasure can be calculated based on a fault occurrence history and/or a production history of the relevant product in the same manner as described above.

### (Configuration by software)

Each functional block provided with the process control apparatus 2 may be configured by hardware logic or realized by software using a CPU, as described below.

That is, the process control apparatus 2 includes a CPU (central processing unit) executing a control program to implement each function, ROM (read only memory) storing the above program, RAM (random access memory) deploying the above program, and a storage device (recording medium) such as memory for storing the above program and various kinds of data. Then, the object of the present invention can also be accomplished by supplying a recording medium in which program code (executable programs, intermediate code programs, or source programs) of the control program, which is software for implementing the above function, of the process control apparatus 2 is recorded in such a way that the program code can be read by a computer to the process control apparatus 2 in which the computer (or the CPU or MPU) reads the program code recorded in the recording medium.

As the above recording medium, for example, a tape such as a magnetic tape and cassette tape, a disk including a magnetic disk such as a floppy (registered trademark) disk/hard disk and an optical disk such as CD-ROM/MO/MD/DVD/CD-R, a card such as an IC card (including a memory card)/optical card, and semiconductor memory such as mask ROM/EPROM/EEPROM/flash ROM can be used.

Also, the process control apparatus 2 may also be configured to be connectable to a communication network to supply the above program code via the communication network. The communication network that can be used is not specifically limited and, for example, the Internet, intranet, extranet, LAN, ISDN, VAN, CATV communication network, virtual private network, telephone line network, mobile communication network, and satellite communication network can be used. A transmission medium constituting a communication network is not specifically limited and, for example, a wire medium such as IEEE1394, USB, power line transmission, cable TV line, telephone line, and ADSL line, and a wireless medium such as infrared rays like IrDA and a remote control, Bluetooth (registered trademark), 802, 11 wireless, HDR, mobile phone network, satellite line, and terrestrial wave digital network. The present invention is also realized in a form of computer data signals embedded in carriers that embody the above program code by electronic transmission.

The present invention is not limited to the above embodiment and can be modified in various forms within the scope shown by claims. That is, embodiments obtained by combining technical aspects modified suitably within the scope shown by claims are also included in the technical scope of the present invention.

The present invention can be applied to various fault management apparatuses controlling reliability analysis and fault factor analysis of management targets by the technique of FMEA.

## Claims

1. A fault management apparatus comprising:
a fault extractor for extracting fault information containing specific fault content information from a fault occurrence history by reading the fault occurrence history from a fault occurrence history storage device storing, as the fault occurrence history, fault information containing fault content information showing content of a fault occurring to a management target;
at least one of an influence degree calculator for calculating a degree of influence showing a degree of influence of a specific fault on the management target, an occurrence frequency calculator for calculating an occurrence frequency showing an occurrence frequency of the specific fault, and a detection degree calculator for calculating a degree of detection showing difficulty of detecting the specific fault; and
an output controller for outputting at least one of said degree of influence, said occurrence frequency and said degree of detection, wherein
the influence degree calculator calculates the degree of influence by performing statistical processing based on at least one of detection status information showing detection status of an occurrence of the fault and action content information showing content of action taken to improve the fault contained in the fault information extracted by the fault extractor,
the occurrence frequency calculator calculates the occurrence frequency by reading processing history information from a processing history storage device storing the processing history information showing a history of processing performed to the management target and performing statistical processing based on the fault information extracted by the fault extractor and the processing history information, and
the detection degree calculator calculates the degree of detection showing difficulty of detecting the specific fault by performing statistical processing based on at least one of the detection status information showing the detection status of the occurrence of the fault and detection method information showing a method of detecting the occurrence of the fault contained in the fault information extracted by the fault extractor.

2. The fault management apparatus according to claim 1 further comprising:
a risk priority number calculator for calculating a risk priority number showing a level of necessity of countermeasure based on at least one of said degree of influence, said occurrence frequency, and said degree of detection; wherein
said output controller outs the risk priority number calculated by the risk priority number calculator.

3. The fault management apparatus according to claim 2, further comprising a fault mode adder for adding or updating a fault mode containing the risk priority number calculated by the risk priority number calculator to an FMEA (Failure Mode and Effects Analysis) table in an FMEA table storage part storing the FMEA table composed of fault modes containing at least information showing fault phenomena that can occur for each type of the management targets and risk priority number information showing the level of necessity of countermeasure for the fault shown in the phenomena.

4. The fault management apparatus according to claim 3, wherein the fault mode adder adds or updates to the FMEA table a fault mode to which the risk priority number calculated by the risk priority number calculator after taking improvement countermeasure for the fault is added as a post-countermeasure risk priority number.

5. A fault management method comprising:
a fault extracting step of extracting fault information containing specific fault content information from a fault occurrence history by reading the fault occurrence history from a fault occurrence history storage device storing, as the fault occurrence history, fault information containing fault content information showing content of a fault occurring to a management target;
at least one of a influence degree calculating step of calculating a degree of influence showing a degree of influence of a specific fault on the management target, an occurrence frequency calculating step of calculating an occurrence frequency showing an occurrence frequency of the specific fault, and a detection degree calculating step of calculating a degree of detection showing difficulty of detecting the specific fault;
a risk priority number calculating step of calculating a risk priority number showing a level of necessity of countermeasure based on at least one of the degree of influence, occurrence frequency, and degree of detection, and
an output controlling step of outputting the risk priority number calculated in the risk priority number calculating step, wherein
the influence degree calculating step calculates the degree of influence by performing statistical processing based on at least one of detection status information showing detection status of an occurrence of the fault and action content information showing content of action taken to improve the fault contained in the fault information extracted in the fault extracting step,
the occurrence frequency calculating step calculates the occurrence frequency by reading processing history information from a processing history storage device storing the processing history information showing a history of processing performed to the management target and performing statistical processing based on the fault information extracted in the fault extracting step and the processing history information, and
the detection degree calculating step calculates the degree of detection showing difficulty of detecting the specific fault by performing statistical processing based on at least one of the detection status information showing the detection status of the occurrence of the fault and detection method information showing a method of detecting the occurrence of the fault contained in the fault information extracted in the fault extracting step.

6. A computer readable recording medium recording a fault management program for causing a fault management apparatus according to any of claims 1 to 4 to operate, wherein the fault management program causes a computer to function as each of the above units according to any of claims 1 to 4.
